# EUROPEAN PATENT APPLICATION

(11) **EP 4 590 012 A1**
(43) Date of publication of application: **23.07.2025**
(21) Application number: 23859189.5
(22) Date of filing: 21.08.2023
(51) Int. Cl.: H04W 16/10

(54) **METHOD AND APPARATUS USED IN COMMUNICATION NODE FOR WIRELESS COMMUNICATION**

(30) Priority: 31.08.2022 CN 202211053274
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/113986
(87) International publication number: WO 2024/046155

(57) **Abstract**

The present application discloses a method and apparatus used in a communication node for wireless communication. A communication node sends at least one preamble, and in response to sending the at least one preamble, monitors and receives a first PDCCH in a first time window, wherein the first PDCCH is QCL with a first RS resource; the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default. For uplink coverage enhancement of a PRACH, the present application provides a scheme for determining, according to the number of RS resources associated with the at least one preamble, spatial parameters of a PDCCH used for scheduling a random access response, and the scheme can be compatible with the existing standard, thereby reducing the implementation complexity and the power consumption.

## Description

### Technical Field

The present application relates to transmission methods and apparatuses in wireless communication systems, in particular to coverage-enhanced transmission methods and apparatuses.

### Background Art

Coverage is one of the key factors that operators consider when commercializing cellular communication networks, because it directly affects service quality, capital expenditure (CAPEX) and operating costs (OPEX). Uplink (UL) performance may be a bottleneck in most scenarios actually deployed, while in some emerging vertical use cases, uplink traffic is high, such as video upload. In the Rel-17 "NR (New Radio) Coverage Enhancement" work item (WI), expanded enhancement is performed for an NR coverage rate of a PUSCH (Physical uplink shared channel), a PUCCH (Physical uplink control channel) and an Msg3 (Message 3). However, the improvement of a PRACH (Physical random access channel) coverage has not been resolved. Since PRACH transmission is very important in many processes, such as initial access and beam failure recovery, Rel-18 established the "Further NR coverage enhancements" work item to further enhance the uplink coverage of a PRACH.

### Summary of the Invention

Performing a PRACH repetition in a random access procedure is an effective means to enhance the uplink coverage of a PRACH. Multiple PRACH repetitions are associated with multiple SSBs (Synchronization Signal Blocks), which can increase the success probability of random access on an airspace. When a PRACH repetition is associated with multiple SSBs, how to determine whether spatial parameters for monitoring a PDCCH (Physical Downlink Control Channel) need to be enhanced.

In view of the above-mentioned problem, the present application provides a solution for random access. In the description for the above-mentioned problem, an NR system is used as an example; the present application is also applicable to scenarios such as LTE systems; further, although the original intention of the present application is to target Uu air ports, the present application can also be used for PC5 ports. Further, although the original intention of this application is to target terminal and base station scenarios, the present application is also applicable to V2X (Vehicle-to-Everything) scenarios, and communication scenarios between terminals and relays, as well as between relays and base stations, achieving similar technical effects in terminal and base station scenarios. Further, although the original intention of the present application is to target terminal and base station scenarios, the present application is also applicable to IAB (Integrated Access and Backhaul) communication scenarios, achieving similar technical effects in terminal and base station scenarios. Further, although the original intention of the present application is to target Terrestrial Network scenarios, the present application is also applicable to communication scenarios of non-terrestrial networks (NTNs), achieving similar technical effects in TN scenarios. In addition, adopting a unified solution in different scenarios can also help reduce hardware complexity and costs.

As one embodiment, the explanation of the terminology in the present application refers to the definitions in the TS36 series of the specification protocol of 3GPP.

As one embodiment, the explanation of the terminology in the present application refers to the definitions in the TS38 series of the specification protocol of 3GPP.

As one embodiment, the explanation of the terminology in the present application refers to the definitions in the TS37 series of the specification protocol of 3GPP.

As one embodiment, the explanation of the terminology in the present application refers to the definitions in the specification protocol of IEEE (Institute of Electrical and Electronics Engineers).

It should be noted that in case of no conflict, the embodiments and features in any node of the present application may be applied to any other node. In the case of no conflict, the embodiments and the features in the embodiments in the present application can be arbitrarily combined with each other.

The present application discloses a method used in a first node for wireless communication, comprising:
sending at least one preamble;
and in response to sending the at least one preamble, monitoring and receiving a first PDCCH in a first time window;
wherein the first PDCCH is QCL (Quasi co-location) with a first RS (Reference Signal) resource, and the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default.

As one embodiment, the problem to be solved in the present application comprises: how to determine spatial parameters of the first PDCCH.

As one embodiment, the problem to be solved in the present application comprises: how to determine the first RS resource.

As one embodiment, the problem to be solved in the present application comprises: how to determine the first RS resource.

As one embodiment, the characteristics of the above method comprises: the first RS resource is determined by default.

As one embodiment, the characteristics of the above method comprises: the first RS resource is used for determining spatial parameters of the first PDCCH.

As one embodiment, the characteristics of the above method comprises: spatial parameters of the first PDCCH are determined according to the first RS resource.

As one embodiment, the characteristics of the above method comprises: a first PDCCH for the at least one preamble is monitored and received in a first time window; the first PDCCH is QCL with a first RS resource, and the first RS resource is determined by default.

As one embodiment, the benefits of the above method include: improving standard compatibility.

As one embodiment, the benefits of the above-mentioned method include: reducing implementation complexity.

As one embodiment, the benefits of the above method include: avoiding increasing search space (SS) of the first PDCCH and reducing power consumption.

According to one aspect of the present application, comprising:
receiving a first signaling set, the first signaling set being used for configuring the first RS resource;
wherein the first signaling set comprises an RRC (Radio Resource Control) message.

According to one aspect of the present application, comprising:
monitoring a PDCCH in a first CORESET (Control resource set);
wherein the PDCCH in the first CORESET is QCL with the first RS resource.

According to one aspect of the present application, comprising:
sending a first preamble group before the at least one preamble, the first preamble group comprising one or more preambles;
and in response to sending the first preamble group, receiving a first wireless signal before the at least one preamble;
wherein the first wireless signal is used for indicating that a random access procedure is successful, and the first RS resource is an RS resource associated with the first preamble group.

According to one aspect of the present application, comprising:
the first receiver for receiving a third PDCCH before the at least one preamble is sent;
wherein the third PDCCH is scrambled by a first C-RNTI (Cell Radio Network Temporary Identifier); the third PDCCH is used for determining the first RS resource.

According to one aspect of the present application, the phrase "the first RS resource is determined by default" comprises: the first RS resource does not change with the L1 RS resources.

According to one aspect of the present application, a triggering event of the at least one preamble is a first event, the first event is any candidate event in a first candidate event set, and the first candidate event set comprises Initial Access.

The present application discloses a method used in a second node for wireless communication, comprising:
receiving at least one preamble;
and in response to receiving the at least one preamble, sending a first PDCCH; the first PDCCH being monitored and received in a first time window;
wherein the first PDCCH is QCL with a first RS resource, and the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default.

According to one aspect of the present application, comprising:
sending a first signaling set, wherein the first signaling set is used for configuring a first RS resource;
wherein the first signaling set comprises an RRC message.

According to one aspect of the present application, a sender of the at least one preamble monitors a PDCCH in a first CORESET; and the PDCCH in the first CORESET is QCL with the first RS resource.

According to one aspect of the present application, comprising:
receiving a first preamble group before the at least one preamble, the first preamble group comprising one or more preambles;
and in response to receiving the first preamble group, sending a first wireless signal before the at least one preamble;
wherein the first wireless signal is used for indicating that a random access procedure is successful, and the first RS resource is an RS resource associated with the first preamble group.

According to one aspect of the present application, comprising:
sending a third PDCCH before receiving the at least one preamble;
wherein the third PDCCH is scrambled by a first C-RNTI; the third PDCCH is used for determining the first RS resource.

According to one aspect of the present application, the phrase "the first RS resource is determined by default" comprises: the first RS resource does not change with the L1 RS resources.

According to one aspect of the present application, a triggering event of the at least one preamble is a first event, the first event is any candidate event in a first candidate event set, and the first candidate event set comprises initial access.

The present application discloses a first node used for wireless communication, comprising:
a first transmitter for sending at least one preamble;
a first receiver for, in response to sending the at least one preamble, monitoring and receiving a first PDCCH in a first time window;
wherein the first PDCCH is QCL with a first RS resource, and the at least one preamble is associated with L1 RS resources; the first RS resource depends on the L1; and the L1 is 1 and the first RS resource is the L1 RS resources, or the L1 is greater than 1, any two RS resources in the L1 RS resources are not QCL, and the first RS resource is determined by default.

The present application discloses a second node used for wireless communication, comprising:
a second receiver for receiving at least one preamble;
a second transmitter for, in response to receiving the at least one preamble, sending a first PDCCH; the first PDCCH being monitored and received in a first time window;
wherein the first PDCCH is QCL with a first RS resource, and the at least one preamble is associated with L1 RS resources; the first RS resource depends on the L1; and the L1 is 1 and the first RS resource is the L1 RS resources, or the L1 is greater than 1, any two RS resources in the L1 RS resources are not QCL, and the first RS resource is determined by default.

As one embodiment, compared with the traditional solution, the present application has the following advantages:
- . improving standard compatibility;
- . reducing the implementation complexity;
- . avoiding increasing search space for the first PDCCH and reducing power consumption.

### Brief Description of the Drawings

Other features, objects and advantages of the present application will become more apparent by reading the detailed description of non-limiting embodiments with reference to the following drawings:
FIG. 1 shows a transmission flowchart of at least one preamble and a first PDCCH according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a flowchart of wireless signal transmission according to another embodiment of the present application;
FIG. 7 shows a flowchart of wireless signal transmission according to a further embodiment of the present application;
FIG. 8 shows a schematic diagram of a first RS resource that does not change with L1 RS resources according to one embodiment of the present application;
FIG. 9 shows that a triggering event of at least one preamble is a first event according to one embodiment of the present application;
FIG. 10 shows a structural block diagram of a processing apparatus for a first node according to one embodiment of the present application;
FIG. 11 shows a structural block diagram of a processing apparatus used in a second node according to one embodiment of the present application;
FIG. 12 shows a flowchart of wireless signal transmission according to one embodiment of the present application.

### Detailed Description of Embodiments

The technical solution of the present application will be further described in detail below in conjunction with drawings. It should be noted that the embodiments and features in the embodiments in the present application can be arbitrarily combined with each other in case of no conflict.

### Embodiment 1

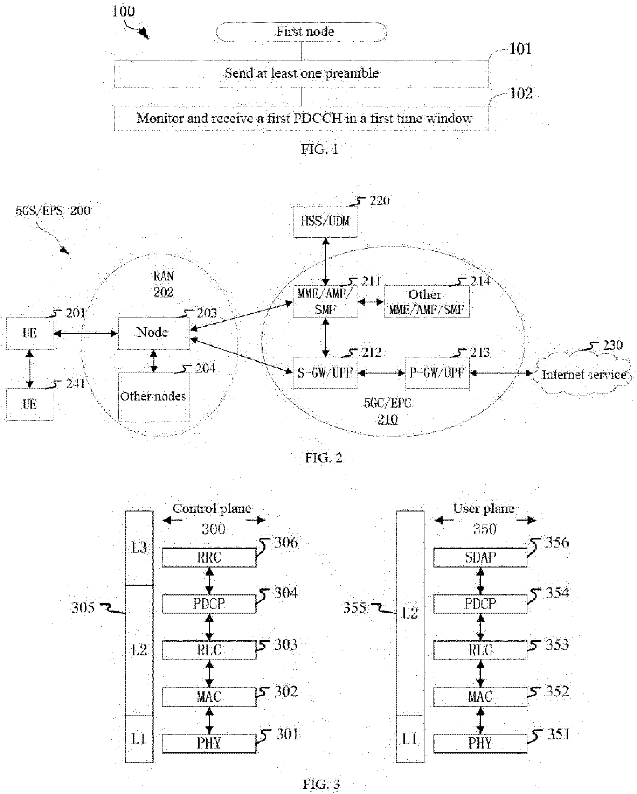

Embodiment 1 illustrates a transmission flowchart of at least one preamble and a first PDCCH according to one embodiment of the present application, as shown in FIG. 1. In FIG. 1, each block represents one step. It should be specifically emphasized that the sequence of blocks in the figure does not indicate temporal ordering of the represented steps.

In Embodiment 1, a first node in the present application, in step 101, sends at least one preamble; and in step 102, in response to sending the at least one preamble, monitors and receives a first PDCCH in a first time window; wherein the first PDCCH is QCL with a first RS resource, and the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default.

As one embodiment, the at least one preamble and the first PDCCH belong to a first random access procedure.

As one embodiment, the first random access procedure is a 4-step RA procedure.

As one embodiment, the first random access procedure is a Contention Based Random Access (CBRA) procedure.

As one embodiment, the first random access procedure is performed on a first cell.

As one embodiment, the first random access procedure is performed on a MAC entity for a cell group to which the first cell belongs.

As one embodiment, the first cell is an SpCell (Special Cell).

As one embodiment, the first cell is a PCell (Primary cell).

As one embodiment, the first cell is a PSCell (Primary SCG (Secondary Cell Group) Cell, SCG primary cell).

As one embodiment, each preamble in the at least one preamble indicates a PRACH repetition.

As one embodiment, each preamble in the at least one preamble is configured to a PRACH repetition.

As one embodiment, the at least one preamble is for one PRACH repetition.

As one embodiment, the at least one preamble is one PRACH repetition.

As one embodiment, any two preambles in the at least one preamble are the same.

As one embodiment, any two preambles in the at least one preamble are different.

As one embodiment, there are two different preambles in the at least one preamble.

As one embodiment, there are two same preambles in the at least one preamble.

As one embodiment, within a time interval between moments at which any two preambles in the at least one preamble are sent, the aim is that PREAMBLE_POWER_RAMPING_COUNTER of the first random access procedure is not increased.

As one embodiment, within a time interval between moments at which any two preambles in the at least one preamble are sent, the aim is that PREAMBLE_TRANSMISSION_COUNTER of the first random access procedure is not increased.

As one embodiment, it can be restarted during running of the first time window.

As one embodiment, it cannot be restarted during running of the first time window.

As one embodiment, it is restarted during running of the first time window.

As one embodiment, it is not restarted during running of the first time window.

As one embodiment, the first time window comprises a positive-integer number of slots.

As one embodiment, the first time window comprises a positive-integer number of subframes.

As one embodiment, the first time window comprises a positive-integer number of milliseconds.

As one embodiment, the first time window is one timer.

As one embodiment, the first time window is one time window.

As one embodiment, the first time window is used for monitoring a random access response.

As one sub-embodiment of this embodiment, the first time window is a time window for monitoring a random access response.

As one sub-embodiment of this embodiment, the first time window is one ra-ResponseWindow.

As one sub-embodiment of this embodiment, the first time window is dedicated to a PRACH repetition.

As one sub-embodiment of this embodiment, the first time window is not dedicated to a PRACH repetition.

As one sub-embodiment of this embodiment, during a period when the first time window is running, there is no running ra-ResponseWindow outside the first time window for the first random access procedure.

As one sub-embodiment of this embodiment, during a period when the first time window is running, there is at least one running ra-ResponseWindow outside the first time window for the first random access procedure.

As one sub-embodiment of this embodiment, the first preamble in the at least one preamble is sent to a time interval in which the first time window is started, any ra-ResponseWindow outside the first time window is not started, and any ra-ResponseWindow outside the first time window is not started during the running of the first time window.

As one sub-embodiment of this embodiment, an end moment at which the first preamble in the at least one preamble is sent is used for determining a start moment of the first time window.

As one sub-embodiment of this embodiment, an end moment at which the last preamble in the at least one preamble is sent is used for determining a start moment of the first time window.

As one sub-embodiment of this embodiment, in a time interval from a time at which the first preamble in the at least one preamble is sent to a time at which the first time window is started, at least one ra-ResponseWindow outside the first time window is started.

As one sub-embodiment of this embodiment, an end moment when each preamble in the at least one preamble is sent is used for determining a start moment of one ra-ResponseWindow.

As one sub-embodiment of this embodiment, in response to sending the at least one preamble, a PDCCH is monitored in at least one ra-ResponseWindow; the first time window is one ra-ResponseWindow in the at least one ra-ResponseWindow.

As one sub-embodiment of this embodiment, the number of the at least one ra-ResponseWindow is equal to the number of the at least one preamble.

As one sub-embodiment of this embodiment, the number of the at least one ra-ResponseWindow is not greater than the number of the at least one preamble.

As one sub-embodiment of this embodiment, the number of the at least one ra-ResponseWindow is equal to the number of RS resources associated with the at least one preamble.

As one embodiment, "monitoring and receiving a first PDCCH in a first time window" comprises: monitoring and receiving the first PDCCH when the first time window is running.

As one embodiment, "monitoring and receiving a first PDCCH in a first time window" comprises: monitoring and receiving the first PDCCH during running of the first time window.

As one embodiment, "monitoring and receiving a first PDCCH in a first time window" comprises: monitoring the first PDCCH in the first time window.

As one embodiment, "monitoring and receiving a first PDCCH in a first time window" comprises: receiving the first PDCCH in the first time window.

As one embodiment, "monitoring and receiving the first PDCCH in a first time window" comprises: monitoring and receiving the first PDCCH in the first time window.

As one embodiment, the first PDCCH is physical layer signaling.

As one embodiment, the first PDCCH is transmitted on a PDCCH.

As one embodiment, the first PDCCH is a piece of DCI (Downlink Control Information).

As one embodiment, the first PDCCH is one PDCCH transmission.

As one embodiment, the first PDCCH is used for scheduling a PDSCH (Physical downlink shared channel).

As one embodiment, the first PDCCH is used for scheduling a PUSCH (Physical uplink shared channel).

As one embodiment, the first PDCCH is used for scheduling a PDSCH and a PUSCH.

As one embodiment, the first PDCCH is used for scheduling only one PDSCH.

As one embodiment, the first PDCCH is used for scheduling one or more PDSCHs.

As one embodiment, the first PDCCH is used for scheduling only one PUSCH.

As one embodiment, the first PDCCH is used for scheduling one or more PUSCHs.

As one embodiment, a format of the first PDCCH is DCI format 1_0.

As one embodiment, a format of the first PDCCH is DCI format 1_1.

As one embodiment, a format of the first PDCCH is DCI format 0_0.

As one embodiment, a format of the first PDCCH is DCI format 0_1.

As one embodiment, the first PDCCH is used for scheduling a random access response to the at least one preamble.

As one sub-embodiment of this embodiment, the first PDCCH is used for scheduling a random access response to at least one preamble in the at least one preamble.

As one sub-embodiment of this embodiment, the first PDCCH is used for scheduling a random access response to each preamble in the at least one preamble.

As one sub-embodiment of this embodiment, the first PDCCH is used for scheduling a random access response to any preamble in the at least one preamble.

As one embodiment, the first PDCCH is scrambled by a first RA-RNTI.

As one sub-embodiment of this embodiment, CRC (Cyclic redundancy check) of the first PDCCH is scrambled by the first RA-RNTI.

As one sub-embodiment of this embodiment, the first PDCCH is DCI format 1_0 scrambled by the first RA-RNTI.

As one sub-embodiment of this embodimens, the first RA-RNTI is one RA-RNTI.

As one sub-embodiment of this embodiment, the first RA-RNTI is related to the L1 RS resources.

As one sub-embodiment of this embodiment, the first RA-RNTI is related to at least one RS resource in the L1 RS resources.

As one sub-embodiment of this embodiment, the first RA-RNTI is related to each RS resource in the L1 RS resources.

As one sub-embodiment of this embodiment, the first RA-RNTI is related to only one RS resource in the L1 RS resources.

As one embodiment, in a time interval from a time at which the at least one preamble is sent to a time at which the first PDCCH is received, PREAMBLE_POWER_RAMPING_COUNTER is not increased.

As one embodiment, in a time interval from a time at which the at least one preamble is sent to a time at which the first PDCCH is received, PREAMBLE_TRANSMISSION_COUNTER is not increased.

As one embodiment, the first node assumes the first PDCCH is QCL with the first RS resource.

As one embodiment, the first node may assume that the first PDCCH is QCL with the first RS resource.

As one embodiment, when receiving the first PDCCH, the first node may assume that the first PDCCH is QCL with the first RS resource.

As one embodiment, when monitoring and receiving the first PDCCH, the first node may assume that the first PDCCH is QCL with the first RS resource.

As one embodiment, if the first PDCCH is received, the first node may assume that the first PDCCH is QCL with the first RS resource.

As one embodiment, if the first PDCCH is successfully received, the first node may assume that the first PDCCH is QCL with the first RS resource.

As one embodiment, "the first PDCCH is QCL with a first RS resource" comprises: the first PDCCH has the same DM-RS (Demodulation reference signal) port quasi co-location properties as the first RS resource.

As one embodiment, "the first PDCCH is QCL with a first RS resource" comprises: a DM-RS port of the first PDCCH is QCL with the first RS resource.

As one embodiment, "the first PDCCH is QCL with a first RS resource" comprises: a DM-RS port for receiving the first PDCCH is QCL with the first RS resource.

As one embodiment, "the first PDCCH is QCL with a first RS resource" comprises: DM-RS port quasi co-location properties of the first PDCCH are QCL with the first RS resource.

As one embodiment, "the first PDCCH is QCL with a first RS resource" comprises: a spatial parameter of the first RS resource is used for determining a spatial parameter of receiving the first PDCCH.

As one embodiment, "the first PDCCH is QCL with a first RS resource" comprises: at least one of Doppler shift or Doppler spread or average delay or delay spread or spatial RX parameters of the first PDCCH is QCL with the first RS resource.

As one embodiment, "the first PDCCH is QCL with a first RS resource" comprises: at least one of Doppler shift or Doppler spread or average delay or delay spread or spatial RX parameters of the first PDCCH can be determined according to the first RS resource.

As one embodiment, a QCL relationship between the first PDCCH and the first RS resource is typeA.

As one embodiment, a QCL relationship between the first PDCCH and the first RS resource is typeB.

As one embodiment, a QCL relationship between the first PDCCH and the first RS resource is typeC.

As one embodiment, a QCL relationship between the first PDCCH and the first RS resource is typeD.

As one embodiment, a QCL relationship between the first PDCCH and the first RS resource is configured by qcl-Type1.

As one embodiment, a QCL relationship between the first PDCCH and the first RS resource is configured by qcl-Type2.

As one embodiment, a QCL relationship between the first PDCCH and the first RS resource is not configured.

As one embodiment, a QCL relationship between the first PDCCH and the first RS resource is predefined.

As one embodiment, the first RS resource is one RS resource.

As one embodiment, the first RS resource is one reference RS resource.

As one embodiment, the first RS resource is one DL (Downlink) RS resource.

As one embodiment, the first RS resource is one CSI (Channel State Information) RS resource.

As one embodiment, the first RS resource is one SSB resource.

As one embodiment, the first RS resource is one NZP (Non-Zero-Power) CSI-RS resource indexed by NZP-CSI-RS-ResourceId.

As one embodiment, the first RS resource is one SSB indexed by SSB-Index.

As one embodiment, the first RS resource is one CSI-RS resource indexed by csi-RS-Index.

As one embodiment, an index of the first RS resource is one NZP-CSI-RS-ResourceId.

As one embodiment, an index of the first RS resource is one SSB-Index.

As one embodiment, an index of the first RS resource is one non-negative integer.

As one embodiment, an index of the first RS resource is not smaller than 0 and is not greater than maxNrofSSBs-1.

As one embodiment, an index of the first RS resource is not smaller than 0 and is not greater than maxNrofNZP-CSI-RS-Resources-1.

As one embodiment, an index of the first RS resource is not smaller than 0 and is not greater than maxNrofCSI-RS-ResourcesRRM-1.

As one embodiment, the first RS resource is associated with the at least one preamble.

As one embodiment, the first RS resource is configured by a RACH-ConfigCommon IE (Information Element).

As one embodiment, the first RS resource is configured by a FeatureCombinationPreambles IE.

As one embodiment, the first RS resource is used for indicating a candidate beam of BFR (Beam Failure Recovery).

As one embodiment, the first RS resource is configured by a BeamFailureRecoveryConfig IE.

As one embodiment, the first RS resource is configured by PRACH-ResourceDedicatedBFR.

As one embodiment, "the at least one preamble is associated with L1 RS resources" comprises: the at least one preamble indicates the L1 RS resources.

As one embodiment, "the at least one preamble is associated with the L1 RS resources" comprises: the at least one preamble is configured to the L1 RS resources.

As one embodiment, the at least one preamble is associated with a first random access resource group.

As one embodiment, each preamble in the at least one preamble is one preamble in a first random access resource group.

As one embodiment, each preamble in the first random access resource group is associated with at least one RS resource.

As one embodiment, each preamble in the first random access resource group is associated with only one RS resource.

As one embodiment, the first random access resource group is a group of random access resources.

As one embodiment, the first random access resource group comprises at least one random access resource.

As one embodiment, the first random access resource group is only configured with Preamble group A.

As one embodiment, the first random access resource group is configured with Preamble group A and Preamble group B.

As one embodiment, the first random access resource group is not used for feature combinations.

As one embodiment, the first random access resource group is used for a PRACH repetition.

As one embodiment, candidates of the L1 RS resources comprise Q2 RS resource groups, and the Q2 is a positive integer greater than 1.

As one embodiment, each RS resource in the L1 RS resources is one RS resource in a first RS resource group, and the first RS resource group is one RS resource group in the Q2 RS resource groups.

As one embodiment, the numbers of RS resources included in any two RS resource groups in the Q2 RS resource groups are equal.

As one embodiment, whether the numbers of RS resources included in any two RS resource groups in the Q2 RS resource groups are equal is configurable.

As one embodiment, the number of RS resources included in any RS resource group in the Q2 RS resource groups is L1.

As one embodiment, the number of RS resources included in any RS resource group in the Q2 RS resource groups is configurable.

As one embodiment, the first RS resource is used for determining the Q2 RS resource groups.

As one embodiment, the first RS resource is used for determining the first RS resource group in the Q2 RS resource groups.

As one embodiment, the first RS resource group comprises the L1 RS resources.

As one embodiment, the first RS resource group consists of the L1 RS resources.

As one embodiment, the first RS resource group comprises at least the L1 RS resources.

As one embodiment, the first RS resource is one RS resource group in the first RS resource group.

As one embodiment, the first RS resource is implicitly indicated in the first RS resource group.

As one embodiment, the first RS resource is explicitly indicated in the first RS resource group.

As one embodiment, the first RS resource is a reference RS resource in the first RS resource group.

As one embodiment, the first RS resource is an RS resource associated with one earliest preamble on a time domain in the at least one preamble in the first RS resource group.

As one embodiment, the first RS resource is not any RS resource in the first RS resource group.

As one embodiment, each preamble in the first random access resource group is associated with one RS resource in the first RS resource group.

As one embodiment, the first random access resource group is associated with the first RS resource group.

As one embodiment, "the first random access resource group is associated with the first RS resource group" is used for determining "the at least one preamble is associated with the L1 RS resources".

As one embodiment, each preamble in the at least one preamble belongs to the first random access resource group, and each RS resource in the L1 RS resources belongs to a first RS resource group; the first random access resource group is associated with the first RS resource group.

As one embodiment, if one preamble is associated with one RS resource, a PRACH occasion of the one preamble is related to the one RS resource.

As one embodiment, if one preamble is associated with one RS resource, the one preamble is sent at a PRACH occasion corresponding to the one RS resource.

As one embodiment, "the first RS resource depends on the L1" comprises: the first RS resource is related to only the L1.

As one embodiment, "the first RS resource depends on the L1" comprises: the first RS resource is related to at least the L1.

As one embodiment, "the first RS resource depends on the L1" comprises: only the L1 is used for determining the first RS resource.

As one embodiment, "the first RS resource depends on the L1" comprises: at least the L1 is used for determining the first RS resource.

As one embodiment, "the first RS resource depends on the L1" comprises: whether the L1 is equal to 1 is used for determining the first RS resource.

As one embodiment, "the first RS resource depends on the L1" comprises: the first RS resource is related to whether the L1 is equal to 1.

As one embodiment, "the first RS resource depends on the L1" comprises: if the L1 is 1, the first RS resource is the L1 RS resources; and if the L1 is greater than 1, the first RS resource is determined by default.

As one embodiment, "the first RS resource depends on the L1" comprises: the L1 is 1 and the first RS resource is the L1 RS resources, or the L1 is greater than 1, any two RS resources in the L1 RS resources are not QCL, and the first RS resource is determined by default.

As one embodiment, "the first RS resource depends on the L1" comprises: determining the first RS resource according to whether the L1 is greater than 1.

As one embodiment, if the L1 is 1, the first RS resource is the L1 RS resources.

As one embodiment, if the L1 is 1, the at least one preamble is associated with the first RS resource.

As one embodiment, if the L1 is greater than 1, the at least one preamble is associated with the L1 RS resources; the first RS resource is one RS resource in the L1 RS resources.

As one embodiment, if the L1 is greater than 1, the at least one preamble is associated with the L1 RS resources; the first RS resource is not any RS resource in the L1 RS resources.

As one embodiment, if the L1 is greater than 1, any two RS resources in the L1 RS resources are not QCL and the first RS resource is determined by default.

As one embodiment, "the first RS resource is determined by default" comprises: the first RS resource is predefined.

As one embodiment, "the first RS resource is determined by default" comprises: the first RS resource is preconfigured.

As one embodiment, "the first RS resource is determined by default" comprises: the first RS resource is configured to the first node before the first random access procedure is initiated.

As one embodiment, "the first RS resource is determined by default" comprises: the first RS resource is configured to the first node before the at least one preamble is sent.

As one embodiment, "the first RS resource is determined by default" comprises: the first RS resource is configured to the first node before the at least one preamble is selected.

As one embodiment, "the first RS resource is determined by default" comprises: the first RS resource is not QCL with any RS resource in the L1 RS resources.

As one embodiment, "the first RS resource is determined by default" comprises: the first RS resource is an RS resource subjected to QCL with the last PDCCH successfully received before the first random access procedure is initiated.

As one embodiment, "the first RS resource is determined by default" comprises: the first RS resource is an RS resource subjected to QCL with a PDCCH in the first CORESET.

As one embodiment, "the first RS resource is determined by default" comprises: the first RS resource is QCL with one preconfigured RS resource.

As one embodiment, "the first RS resource is determined by default" comprises: a candidate of the first RS resource comprises at least one RS resource not QCL with any RS resource in the L1 RS resources.

As one embodiment, "the first RS resource is determined by default" comprises: the first RS resource is determined before determining the L1 RS resources.

As one embodiment, "the first RS resource is determined by default" comprises: the first RS resource is used for determining the L1 RS resources, and the first RS resource is one of the L1 RS resources.

As one embodiment, the "the first RS resource is determined by default" comprises: the first RS resource is used for determining the L1 RS resources, and the first RS resource is a reference RS resource in the L1 RS resources.

As one embodiment, "the first RS resource is determined by default" comprises: the first RS resource is an RS resource used for determining the first RA-RNTI.

As one embodiment, "the first RS resource is determined by default" comprises: the first RS resource is an RS resource associated with the first preamble in the at least one preamble.

As one embodiment, "any two RS resources in the L1 RS resources are not QCL" comprises: any RS resource in the L1 RS resources is not QCL to another RS resource in the L1 RS resources.

As one embodiment, the L1 RS resources are configured to the first cell.

As one embodiment, the L1 RS resources are configured to the same one uplink carrier of the first cell.

As one embodiment, the L1 RS resources are configured to the same one BWP of the same one uplink carrier of the first cell.

As one embodiment, "SSBs indicated by any two SSB-indexes in one BWP (Bandwidth Part) are not QCL" is used for determining that any two RS resources in the L1 RS resources are not QCL.

As one embodiment, "any two RS resources in the L1 RS resources are not QCL to the same one SSB in a BWP" is used for determining that any two RS resources in the L1 RS resources are not QCL.

As one embodiment, if two RS resources are respectively QCL with SSBs indicated by any two SSB-indexes in one BWP, the two RS resources are not QCL.

As one embodiment, when the L1 is greater than 1, the at least one preamble comprises a plurality of preambles, and the plurality of preambles respectively occupy a plurality of PRACH occasions.

As one embodiment, when the L1 is equal to 1, the at least one preamble comprises a plurality of preambles, and the plurality of preambles respectively occupy a plurality of PRACH occasions.

As one embodiment, any 2 PRACH occasions in the plurality of PRACH occasions do not overlap on a time domain.

As one embodiment, when the L1 is equal to 1, the at least one preamble comprises only one preamble, and the only one preamble occupies one PRACH occasion.

As one embodiment, the PRACH repetition comprises: an Msg1 (Message 1) repetition.

As one embodiment, the PRACH repetition comprises: a RACH repetition.

As one embodiment, the PRACH repetition comprises: sending a plurality of PRACHs in one random access attempt.

As one embodiment, the PRACH repetition comprises: sending a plurality of PRACHs between two PREAMBLE_TRANSMISSION_COUNTER updates.

As one embodiment, the PRACH repetition comprises: sending a plurality of PRACHs between two PREAMBLE_POWER_RAMPING_COUNTER updates.

As one embodiment, the PRACH repetition comprises: a plurality of consecutive PRACHs.

As one embodiment, the DM-RS port comprises: a DM-RS antenna port.

As one embodiment, the DM-RS port comprises: a DMRS port.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terms. The 5GS/EPS 200 may comprise at least one of UE (User Equipment) 201, an RAN (Radio Access Network) 202, a 5GC (5G Core Network)/EPC (Evolved Packet Core) 210, an HSS (Home Subscriber Server)UDM (Unified Data Management) 220, and an Internet service 230. The 5GS/EPS may be interconnected with other access networks, but these entities/interfaces are not shown for simplicity. As shown in the figure, the 5GS/EPS provides packet switching services, however, those skilled in the art will readily understand that various concepts presented throughout the present application can be extended to networks or other cellular networks that provide circuit switching services. The RAN comprises a node 203 and other nodes 204. The node 203 provides user and control plane protocol termination toward the UE201. The node 203 may be connected to other nodes 204 via an Xn interface (for example, backhaul)/X2 interface. The node 203 may also be referred to as a base station, a base transceiver station, a radio base station, a radio transceiver, a transceiver function, a basic service set (BSS), an extended service set (ESS), a TRP, or some other suitable terms. The node 203 provides the UE201 with access points to 5GC/EPC210. Examples of UE201 comprise cellular telephones, smart phones, Session Initiation Protocol (SIP) telephones, laptops, personal digital assistants (PDAs), satellite radios, non-terrestrial base station communications, satellite mobile communications, global positioning systems, multimedia apparatuses, video apparatuses, digital audio players (for example, MP3 players), cameras, game consoles, drones, aircrafts, narrowband Internet of Things devices, machine type communication devices, land transportation vehicles, automobiles, wearable devices, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The node 203 is connected to the 5GC/EPC210 via an S1/NG interface. The 5GC/EPC 210 comprises MME (Mobility Management Entity)/AMF (Authentication Management Field)/SMF (Session Management Function) 211, other MME/AMF/SMF214, S-GW (Service Gateway)/UPF (User Plane Function) 212, and P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet service 230. The Internet service 230 comprises an operator's corresponding Internet protocol service, which may specifically comprise the Internet, intranets, IMS (IP Multimedia Subsystem), and packet switching streaming services.

As one embodiment, the UE201 corresponds to the first node in the present application.

As one embodiment, the UE201 is a piece of User Equipment (UE).

As one embodiment, the UE201 is one BaseStation (BS) device.

As one embodiment, the UE201 is one relay device.

As one embodiment, the node 203 corresponds to the second node in the present application.

As one embodiment, the node 203 is one base station device.

As one embodiment, the node 203 is a piece of user equipment.

As one embodiment, the node 203 is one relay device.

As one embodiment, the node 203 is a gateway.

Typically, the UE201 is a piece of user equipment and the node 203 is one base station device.

As one embodiment, the user equipment supports transmission of a Non-Terrestrial Network (NTN).

As one embodiment, the user equipment supports transmission of a terrestrial network.

As one embodiment, the user equipment supports transmission in a large-delay-difference network.

As one embodiment, the user equipment supports Dual Connection (DC) transmission.

As one embodiment, the user equipment comprises an aircraft.

As one embodiment, the user equipment comprises a vehicle-mounted terminal.

As one embodiment, the user equipment comprises a vessel.

As one embodiment, the user equipment comprises an Internet of Things terminal.

As one embodiment, the user equipment comprises a terminal of an industrial Internet of Things.

As one embodiment, the user equipment comprises a device that supports low-delay and high-reliability transmission.

As one embodiment, the user equipment comprises a test device.

As one embodiment, the user equipment comprises a signaling tester.

As one embodiment, the base station device comprises a Base Transceiver Station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device supports transmission in a non-terrestrial network.

As one embodiment, the base station device supports transmission in a large-delay-difference network.

As one embodiment, the base station device supports transmission in a terrestrial network.

As one embodiment, the base station device comprises a Marco Cellular base station.

As one embodiment, the base station device comprises a Micro Cell base station.

As one embodiment, the base station device comprises a Pico Cell base station.

As one embodiment, the base station device comprises a Femtocell.

As one embodiment, the base station device comprises a base station device that supports large delay differences.

As one embodiment, the base station device is a flight platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises user equipment.

As one embodiment, the relay device comprises a base station device.

### Embodiment 3

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300. FIG. 3 shows a radio protocol architecture for the control plane 300 using three layers: Layer 1, Layer 2, and Layer 3. Layer 1 (L1 layer) is the lowest layer and implements various PHY (physical layer) signal processing functions. The L1 layer will be referred to herein as PHY301. A layer 2 (L2 layer) 305 is above PHY301, and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security through data packet encryption, and provides cross-zone mobility support. The RLC sublayer 303 provides segmentation and reassembly of upper layer data packets, retransmission of lost data packets, and reordering of data packets to compensate for disordered reception caused by HARQ (Hybrid Automatic Repeat Request). The MAC sublayer 302 provides multiplexing between logical channels and transport channels. The MAC sublayer 302 is also responsible for assigning various radio resources (for example, resource blocks) in one cell. The MAC sublayer 302 is also responsible for HARQ operations. An RRC (Radio Resource Control) sublayer 306 in a layer 3 (L3 layer) in the control plane 300 is responsible for obtaining radio resources (that is, radio bearers) and configuring a lower layer by using RRC signaling. A radio protocol architecture of the user plane 350 comprises a layer 1 (L1 layer) and a layer 2 (L2 layer). Regarding the radio protocol architecture in the user plane 350, the physical layer 351, a PDCP sublayer 354 in the L2 layer 355, an RLC sublayer 353 in the L2 layer 355 and a MAC sublayer 352 in the L2 layer 355 are generally the same as corresponding layers and sublayers in the control plane 300, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS streams and data radio bearers (DRBs) to support service diversity.

As one embodiment, the wireless protocol architecture in FIG. 3 is applicable to the first node in the present application.

As one embodiment, the wireless protocol architecture in FIG. 3 is applicable to the second node in the present application.

As one embodiment, each preamble in the at least one preamble in the present application is generated at the PHY301 or PHY351.

As one embodiment, each preamble in the first preamble group in the present application is generated at the PHY301 or PHY351.

As one embodiment, the first wireless signal in the present application is generated at the PHY301 or PHY351.

As one embodiment, the first wireless signal in the present application is generated at the MAC302 or MAC352.

As one embodiment, the third PDCCH in the present application is generated at the PHY301 or the PHY351.

As one embodiment, the first signaling set in the present application is generated at the RRC306.

As one embodiment, the first signaling set in the present application is generated at the MAC302 or MAC352.

As one embodiment, the first signaling set in the present application is generated at the PHY301 or PHY351.

### Embodiment 4

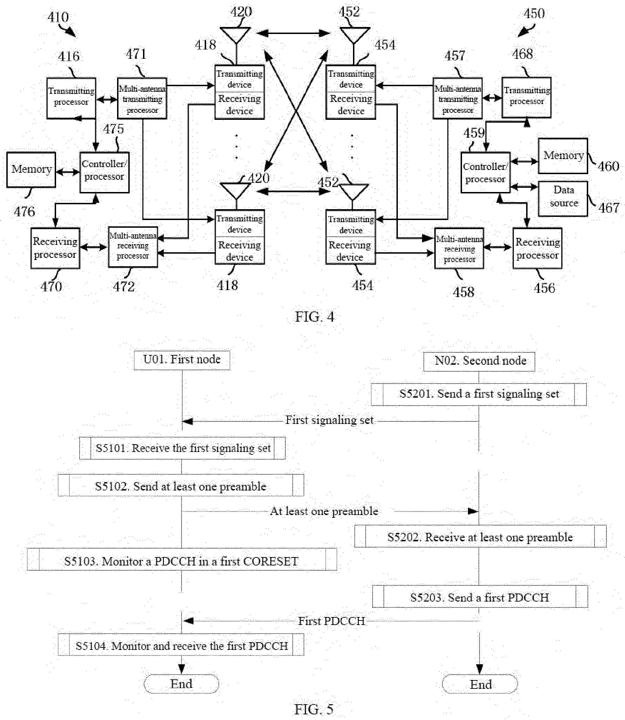

Embodiment 4 shows a schematic diagram of a first communication device and a second communication device according to the present application, as shown in FIG. 4. FIG. 4 is a block diagram of the first communication device 450 and the second communication device 410 that communicate with each other in the access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper layer data packets from the core network are provided to the controller/processor 475. The controller/processor 475 implements the functionality of the L2 layer. In transmission from the second communication device 410 to the first communication device 450, the controller/processor 475 provides header compression, encryption, packet segmentation and reordering, multiplexing between logical channels and transport channels, and radio resource assignment of the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for the L1 layer (that is, the physical layer). The transmitting processor 416 implements encoding and interleaving to facilitate forward error correction (FEC) at the second communication device 410, and mapping of signal clusters based on various modulation schemes (for example, Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmitting processor 471 performs digital spatial precoding of the encoded and modulated symbols, including codebook-based precoding and non-codebook-based precoding, and beamforming processing, to generate one or more spatial streams. The transmitting processor 416 then maps each spatial stream to a subcarrier, that is multiplexed with a reference signal (for example, pilot) in a time domain and/or frequency domain, and then inverse fast fourier transform (IFFT) is used to generate a physical channel carrying a time domain multi-carrier symbol stream. The multi-antenna transmitting processor 471 then performs a simulated precoding/beamforming operation on the time domain multi-carrier symbol stream. Each transmitting device 418 converts the baseband multi-carrier symbol stream provided by the multi-antenna transmitting processor 471 into a radio frequency stream, and then provides it to different antennas 420.

In transmission from the second communication device 410 to the first communication device 450, at the first communication device 450, each receiving device 454 receives a signal through its corresponding antenna 452. Each receiving device 454 recovers information modulated to the radio frequency carrier and converts the radio frequency stream into a baseband multi-carrier symbol stream to provide it to the receiving processor 456. The receiving processor 456 and the multi-antenna receiving processor 458 implement various signal processing functions of the L1 layer. The multi-antenna receiving processor 458 performs receiving simulated precoding/beamforming operations on the baseband multi-carrier symbol stream from the receiving device 454. The receiving processor 456 uses Fast Fourier Transform (FFT) to convert a baseband multi-carrier symbol stream from a time domain to a frequency domain after receiving simulation precoding/beamforming operations. In the frequency domain, the physical layer data signals and the reference signals are demultiplexed by the receiving processor 456, wherein the reference signals are used for channel estimation, and the data signals undergo multi-antenna detection in the multi-antenna receiving processor 458 to recover any spatial stream destined for the first communication device 450. Symbols on each spatial stream are demodulated and recovered in the receiving processor 456 and generate soft decisions. The receiving processor 456 then decodes and deinterleaves the soft decisions to recover upper layer data and control signals transmitted by the second communication device 410 on the physical channel. The upper layer data and control signals are then provided to the controller/processor 459. The controller/processor 459 implements the functions of the L2 layer. The controller/processor 459 may be associated with a memory 460 storing program codes and data. The memory 460 may be referred to as a computer readable medium. In transmission from the second communication device 410 to the second communication device 450, the controller/processor 459 provides demultiplexing between transport channels and logical channels, packet reassembly, decryption, header decompression, and control signal processing to recover upper layer data packets from the core network. The upper layer data packets are then provided to all protocol layers above the L2 layer. Various control signals may also be provided to L3 for L3 processing.

In transmission from the first communication device 450 to the second communication device 410, at the first communication device 450, the data source 467 is used for providing upper layer data packets to the controller/processor 459. The data source 467 represents all protocol layers above the L2 layer. Similar to the transmission function at the second communication device 410 as described for the transmission from the second communication device 410 to the first communication device 450, the controller/processor 459 implements header compression, encryption, packet segmentation and reordering, and multiplexing between logical channels and transport channels based on wireless resource assignment, thereby implementing L2 layer functions for the user plane and the control plane. The controller/processor 459 is also responsible for retransmission of lost packets and signaling to the second communication device 410. The transmitting processor 468 performs modulation mapping and channel encoding processing, and the multi-antenna transmitting processor 457 performs digital multi-antenna spatial precoding, including codebook-based precoding and non-codebook-based precoding, and beamforming processing. The transmitting processor 468 modulates the resulting spatial streams into multi-carrier/single-carrier symbol streams. These streams undergo simulated precoding/beamforming operations in the multi-antenna transmitting processor 457 before being provided to different antennas 452 via the transmitting device 454. Each transmitting device 454 first converts baseband symbol streams provided from the multi-antenna transmitting processor 457 into radio frequency symbol streams, and then supplies the radio frequency symbol streams to the antenna 452.

In transmission from the first communication device 450 to the second communication device 410, the function at the second communication device 410 is similar to the reception function at the first communication device 450 as described for the transmission from the second communication device 410 to the first communication device 450. Each receiving device 418 receives the radio frequency signals through its corresponding antenna 420, converts the received radio frequency signals into baseband signals, and provides the baseband signals to the multi-antenna receiving processor 472 and the receiving processor 470. The receiving processor 470 and the multi-antenna receiving processor 472 jointly implement the function of L1. The controller/processor 475 implements the functions of the L2 layer. The controller/processor 475 may be associated with a memory 476 storing program codes and data. The memory 476 may be referred to as a computer readable medium. In transmission from the first communication device 450 to the second communication device 410, the controller/processor 475 provides demultiplexing between transport channels and logical channels, packet reassembly, decryption, header decompression, and control signal processing to recover upper layer data packets from the UE450. The upper layer data packets from the controller/processor 475 may be provided to the core network.

As one embodiment, the first communication device 450 comprises: at least one processor and at least one memory, and the at least one memory comprises computer program codes; The at least one memory and the computer program codes are configured to be used together with the at least one processor, and the first communication device 450 at least: sends at least one preamble; and in response to sending the at least one preamble, monitors and receives a first PDCCH in a first time window; wherein the first PDCCH is QCL with a first RS resource, and the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default.

As one embodiment, the first communication device 450 comprises: a memory storing a computer readable instruction program that generates an action when executed by at least one processor, and the action comprising: sending first signaling; and in response to sending the at least one preamble, monitoring and receiving a first PDCCH in a first time window; wherein the first PDCCH is QCL with a first RS resource, and the at least one preamble is associated with L1 RS resources; the first RS resource depends on the L1; and the L1 is 1 and the first RS resource is the L1 RS resources, or the L1 is greater than 1, any two RS resources in the L1 RS resources are not QCL, and the first RS resource is determined by default.

As one embodiment, the second communication device 410 comprises: at least one processor and at least one memory, and the at least one memory comprises computer program codes; the at least one memory and the computer program codes are configured to be used together with the at least one processor. The second communication device 410 at least: receives at least one preamble; and in response to receiving the at least one preamble, sends a first PDCCH; the first PDCCH is monitored and received in a first time window; wherein the first PDCCH is QCL with a first RS resource, and the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default.

As one embodiment, the second communication device 410 comprises: a memory storing a computer readable instruction program that generates an action when executed by at least one processor, the action comprising: receiving at least one preamble; and in response to receiving the at least one preamble, sending a first PDCCH; the first PDCCH being monitored and received in a first time window; wherein the first PDCCH is QCL with a first RS resource, and the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default.

As one embodiment, the antenna 452, the transmitting device 454, the transmitting processor 468, and the controller/processor 459 are used for sending at least one preamble.

As one embodiment, at least one of the antenna 420, the receiving device 418, the receiving processor 470, and the controller/processor 475 is used for receiving at least one preamble.

As one embodiment, the antenna 452, the receiving device 454, the receiving processor 456, and the controller/processor 459 are used for receiving a first PDCCH.

As one embodiment, at least one of the antenna 420, the transmitting device 418, the transmitting processor 416, and the controller/processor 475 is used for sending a first PDCCH.

As one embodiment, the antenna 452, the receiving device 454, the receiving processor 456, and the controller/processor 459 are used for receiving a first wireless signal.

As one embodiment, at least one of the antenna 420, the transmitting device 418, the transmitting processor 416, and the controller/processor 475 is used for sending a first wireless signal.

As one embodiment, the antenna 452, the receiving device 454. the receiving processor 456, and the controller/processor 459 are used for receiving a first signaling set.

As one embodiment, at least one of the antenna 420, the transmitting device 418, the transmitting processor 416, and the controller/processor 475 is used for sending a first signaling set.

As one embodiment, the antenna 452, the transmitting device 454, the transmitting processor 468, and the controller/processor 459 are used for sending a first preamble group.

As one embodiment, at least one of the antenna 420, the receiving device 418,the receiving processor 470, and the controller/processor 475 is used for receiving a first preamble group.

As one embodiment, the antenna 452, the receiving device 454, the receiving processor 456, and the controller/processor 459 are used for receiving a third PDCCH.

As one embodiment, at least one of the antenna 420, the transmitting device 418, the transmitting processor 416, and the controller/processor 475 is used for sending a third PDCCH.

As one embodiment, the first communication device 450 corresponds to the first node in the present application.

As one embodiment, the first communication device 450 is a piece of user equipment.

As one embodiment, the first communication device 450 is one base station device (gNB/eNB/ng-eNB).

As one embodiment, the first communication device 450 is one relay device.

As one embodiment, the second communication device 410 corresponds to the second node in the present application.

As one embodiment, the second communication device 410 is a piece of user equipment.

As one embodiment, the second communication device 410 is one base station device (gNB/eNB/ng-eNB).

As one embodiment, the second communication device 410 is one relay device.

### Embodiment 5

Embodiment 5 illustrates a flowchart of wireless signal transmission according to one embodiment of the present application, as shown in FIG. 5. It is particularly noted that the order in the present embodiment does not limit the order of signal transmission and the order of implementation in the present application.

For **a first node U01,** in step S5101, a first signaling set is received, the first signaling set is used for configuring the first RS resource, and the first signaling set comprises an RRC message; in step S5102, at least one preamble is sent; in step S5103, a PDCCH is monitored in a first CORESET, and a PDCCH in the first CORESET is QCL with the first RS resource; In step S5104, in response to sending the at least one preamble, a first PDCCH is monitored and received in a first time window.

For **a second node N02,** in step S5201, the first signaling set is sent; in step S5202, at least one preamble is received; in step S5203, a first PDCCH is sent.

In Embodiment 5, the first PDCCH is QCL with a first RS resource, and the at least one preamble is associated with L1 RS resources; the L1 is greater than 1 and any two RS resources in the L1 RS resources are not QCL and the first RS resource is determined by default.

As one embodiment, the first node U01 is a piece of user equipment.

As one embodiment, the first node U01 is one base station device.

As one embodiment, the first node U01 is one relay device.

As one embodiment, the second node N02 is one base station device.

As one embodiment, the second node N02 is a piece of user equipment.

As one embodiment, the second node N02 is one relay device.

As one embodiment, the second node N02 comprises one TRP.

As one embodiment, the second node N02 comprises two TRPs.

As one embodiment, the second node N02 comprises a first TRP and a second TRP.

As one embodiment, the first node U01 is a piece of user equipment, and the second node N02 is one base station device.

As one embodiment, the first node U01 is a piece of user equipment, and the second node N02 is one relay device.

As one embodiment, the first node U01 is a piece of user equipment, and the second node N02 is a piece of user equipment.

As one embodiment, the first node U01 is one base station device, and the second node N02 is one base station device.

As one embodiment, the first node U01 is one relay device, and the second node N02 is one base station device.

As one embodiment, the first node U01 and the second node N02 are connected through a uu interface.

As one embodiment, the first node U01 and the second node N02 are connected through an Xn interface.

As one embodiment, the first node U01 and the second node N02 are connected through an X2 interface.

As one embodiment, the first node U01 and the second node N02 are connected through a PC5 interface.

As one embodiment, the first node U01 and the second node N02 are connected through an air interface.

As one embodiment, a recipient of the at least one preamble is the first TRP.

As one sub-embodiment of this embodiment, a sender of the first PDCCH is the first TRP.

As one sub-embodiment of this embodiment, a sender of the first PDCCH is the second TRP.

As one embodiment, a recipient of the at least one preamble comprises at least the first TRP and the second TRP.

As one sub-embodiment of this embodiment, a sender of the first PDCCH is the first TRP.

As one sub-embodiment of this embodiment, a sender of the first PDCCH is the second TRP.

As one embodiment, the first signaling set comprises an RRC message.

As one embodiment, the first signaling set only comprises the RRC message.

As one embodiment, the first signaling set comprises at least one RRC message.

As one embodiment, the first signaling set comprises at least one RRC IE (Information Element).

As one embodiment, the first signaling set comprises at least one RRC field.

As one embodiment, the first signaling set comprises a broadcast message.

As one embodiment, the first signaling set comprises a unicast message.

As one embodiment, a logical channel corresponding to the first signaling set comprises a BCCH (Broadcast Control Channel).

As one embodiment, a logical channel corresponding to the first signaling set comprises a DCCH (Dedicated Control Channel).

As one embodiment, the first signaling set comprises a SIB1 (System Information Block 1) message.

As one embodiment, the first signaling set comprises a ServingCellConfigCommonSIB IE.

As one embodiment, the first signaling set comprises an UplinkConfigCommonSIB IE.

As one embodiment, the first signaling set comprises a BWP-UplinkCommon IE.

As one embodiment, the first signaling set comprises an UplinkConfigCommon IE.

As one embodiment, the first signaling set comprises a RACH-ConfigCommon IE.

As one embodiment, the first signaling set comprises at least one RRC field in a RACH-ConfigCommon IE.

As one embodiment, the first signaling set comprises an RRC field with a name comprising featureCombinationPreamblesList.

As one embodiment, the first signaling set comprises at least one RRC IE with a name comprising FeatureCombinationPreambles.

As one embodiment, the first signaling set comprises at least one RRC IE with a name comprising startPreambleForThisPartition.

As one embodiment, the first signaling set comprises at least one RRC IE with a name comprising numberOfPreamblesPerSSB-ForThisPartition.

As one embodiment, the first signaling set comprises at least one RRC IE with a name comprising ssb-SharedRO-MaskIndex.

As one embodiment, the first signaling set comprises at least one RRC IE with a name comprising rsrp-ThresholdSSB.

As one embodiment, the first signaling set comprises at least one RRC IE with a name comprising msgA-RSRP-Threshold.

As one embodiment, the first signaling set comprises an index of the first RS resource.

As one embodiment, the first signaling set comprises a QCL relationship of the first RS resource.

As one embodiment, the first signaling set comprises a TCI (Transmission Configuration Indicator) state of the first RS resource.

As one embodiment, the first signaling set comprises an index of each RS resource in the L1 RS resources.

As one embodiment, the first signaling set is used for determining that the at least one preamble is associated with the L1 RS resources.

As one embodiment, the first signaling set comprises the at least one preamble, and, the first signaling set comprises the L1 RS resources.

As one embodiment, the first signaling set is used for determining the Q2 RS resource groups in the present application, and, the first signaling set is used for determining RS resources included in each RS resource group in the Q2 RS resource groups in the present application.

As one embodiment, the first signaling set is used for determining a preamble associated with RS resources included in each RS resource group in the Q2 RS resource groups in the present application.

As one embodiment, the first signaling set is used for determining that the first random access resource group is associated with the first RS resource group.

As one embodiment, the first signaling set comprises at least the former of an RRC message or a MAC CE (Control Element) or DCI.

As one embodiment, the RRC message included in the first signaling set comprises a PDSCH-config IE.

As one embodiment, the first signaling set comprises a MAC CE.

As one embodiment, the first signaling set comprises an RRC message and a MAC CE.

As one embodiment, a MAC CE included in the first signaling set is used for activating the first RS resource.

As one embodiment, a MAC CE included in the first signaling set is used for indicating the first RS resource.

As one embodiment, a MAC CE included in the first signaling set is used for determining the first RS resource.

As one embodiment, a MAC CE included in the first signaling set comprises an index of the first RS resource.

As one embodiment, the RRC message included in the first signaling set indicates at least one RS resource, and a MAC CE included in the first signaling set is used for determining the first RS resource in the at least one RS resource.

As one embodiment, a MAC CE included in the first signaling set comprises a TCI State ID field.

As one embodiment, a MAC CE included in the first signaling set comprises TCI state indication for UE-specific PDCCH MAC CE.

As one embodiment, the first signaling set comprises DCI.

As one embodiment, the first signaling set comprises an RRC message and DCI.

As one embodiment, DCI included in the first signaling set is used for activating the first RS resource.

As one embodiment, DCI included in the first signaling set is used for indicating the first RS resource.

As one embodiment, DCI included in the first signaling set is used for determining the first RS resource.

As one embodiment, DCI included in the first signaling set comprises an index of the first RS resource.

As one embodiment, the RRC message included in the first signaling set indicates at least one RS resource, and DCI included in the first signaling set is used for determining the first RS resource in the at least one RS resource.

As one embodiment, the DCI included in the first signaling set indicates a unified TCI.

As one embodiment, the first signaling set takes effect before the at least one preamble is sent.

As one embodiment, each signaling in the first signaling set takes effect before the at least one preamble is sent.

As one embodiment, the first random access resource group is not used for feature combinations.

As one sub-embodiment of this embodiment, the first random access resource group is not indicated by an RRC field with a name comprising featureCombinationPreamblesList.

As one sub-embodiment of this embodiment, the first random access resource group is not indicated by an RRC IE with a name comprising FeatureCombination.

As one embodiment, the first random access resource group is used for a PRACH repetition.

As one sub-embodiment of this embodiment, the first signaling set comprises a first FeatureCombinationPreambles IE, the first FeatureCombinationPreambles IE indicates a first random access resource group, the first FeatureCombinationPreambles IE comprises a first FeatureCombination IE, and the first FeatureCombination IE comprises a PRACH repetition indication.

As one sub-embodiment of this embodiment, the first FeatureCombinationPreambles IE is one FeatureCombinationPreambles IE.

As one sub-embodiment of this embodiment, the first FeatureCombination IE is one FeatureCombination IE.

As one sub-embodiment of this embodiment, the first FeatureCombination IE comprises one RRC field, the one RRC field is set to ture, and the one RRC field indicates that the first random access resource group is used for a PRACH repetition.

As one sub-embodiment of this embodiment, the first FeatureCombination IE comprises a PRACH repetition indication to be used for determining that the first random access resource group can be used for a PRACH repetition.

As one sub-embodiment of this embodiment, the first FeatureCombination IE only comprises a PRACH repetition indication.

As one sub-embodiment of this embodiment, the first FeatureCombination IE comprises a PRACH repetition indication, and, the first FeatureCombination IE comprises at least one of a RedCap (Reduced Capability) indication or an SDT (Small Data Transmission) indication or an NSAG (Network Slice AS (Access Stratum) Group) or an MSG3 (Message 3) repetition indication.

As one sub-embodiment of this embodiment, the first FeatureCombination IE does not comprise any one of a RedCap indication or an SDT indication or an NSAG or an MSG3 repetition indication.

As one embodiment, in response to the at least one preamble being sent, a PDCCH is monitored in the first CORESET.

As one embodiment, before the at least one preamble is sent, a PDCCH is monitored in the first CORESET.

As one embodiment, before the at least one preamble is sent, a PDCCH is not monitored in the first CORESET.

As one embodiment, the first PDCCH is received during monitoring of a PDCCH in the first CORESET.

As one embodiment, the first CORESET is one CORESET.

As one embodiment, the first CORESET comprises a time-frequency resource and a frequency-domain resource.

As one embodiment, the first CORESET comprises a time-frequency resource set used for searching downlink control information.

As one embodiment, the first CORESET is one CORESET indicated by ControlResourceSetId.

As one embodiment, the first CORESET is one CORESET indicated by ControlResourceSetZero.

As one embodiment, a CORESET index of the first CORESET is configurable.

As one embodiment, a CORESET index of the first CORESET is predefined.

As one embodiment, a CORESET index of the first CORESET is 0.

As one embodiment, a CORESET index of the first CORESET is not 0.

As one embodiment, the first CORESET is configured to an active DL BWP.

As one embodiment, the first CORESET is configured to an active DL BWP of the first cell.

As one embodiment, the first CORESET is configured to an active DL BWP determined in the first random access procedure.

As one embodiment, the first CORESET is configured with at least one TCI state.

As one embodiment, the first CORESET is configured to a first search space set.

As one embodiment, if the active BWP is an initial DL BWP, a CORESET index of the first CORESET is equal to 0, and, a search space set index of the first search space set is equal to 0.

As one embodiment, the active BWP is an initial DL BWP.

As one embodiment, the active BWP is not an initial DL BWP.

As one embodiment, a search space set index of the first search space set is configurable.

As one embodiment, a search space set index of the first search space set is predefined.

As one embodiment, a search space set index of the first search space set is 0.

As one embodiment, a search space set index of the first search space set is not 0.

As one embodiment, the first search space set is configured in an RRC field with a name comprising ra-SearchSpace.

As one embodiment, the first search space set is configured in an RRC field with a name comprising ra-SearchSpace in PDCCH-ConfigCommon.

As one embodiment, the first search space set is configured in ra-SearchSpace.

As one embodiment, the first search space set is configured in ra-SearchSpace in PDCCH-ConfigCommon.

As one embodiment, the first search space set is used for DCI format 1_0 with CRC scrambled by an RA-RNTI, an MsgB-RNTI, or a TC-RNTI on the primary cell.

As one embodiment, the first search space set is used for DCI format 1_0 with CRC scrambled by an RA-RNTI for a PRACH repetition on the primary cell.

As one embodiment, the first search space set is used by the first node U01 to monitor a PDCCH candidate.

As one embodiment, the first search space set is one CSS (Common search space) set.

As one embodiment, the first search space set is a Type1-PDCCH CSS set.

As one embodiment, the first search space set is a part of a Type1-PDCCH CSS set.

As one embodiment, the first search space set is all in a Type1-PDCCH CSS set.

As one embodiment, the first search space set is one true subset in a Type1-PDCCH CSS set.

As one embodiment, the first search space set does not comprise at least a part of a Type1-PDCCH CSS set.

As one embodiment, the first search space set does not comprise at least one search space in a Type1-PDCCH CSS set.

As one embodiment, the first search space set comprises at least one search space, and each search space in the at least one search space is configured by SearchSpace.

As one embodiment, "a PDCCH in the first CORESET is QCL with the first RS resource" comprises: a PDCCH in the first CORESET has the same DM-RS port quasi co-location properties as the first RS resource.

As one embodiment, "a PDCCH in the first CORESET is QCL with the first RS resource" comprises: a DM-RS port of a PDCCH in the first CORESET is QCL with the first RS resource.

As one embodiment, "a PDCCH in the first CORESET is QCL with the first RS resource" comprises: spatial parameters of the first RS resource are used for determining spatial parameters for receiving a PDCCH in the first CORESET.

As one embodiment, a PDCCH in the first CORESET comprises the first PDCCH.

As one embodiment, a PDCCH in the first CORESET is the first PDCCH.

As one embodiment, "a PDCCH in the first CORESET is QCL with the first RS resource" is used for determining that the first PDCCH is QCL with the first RS resource.

As one embodiment, the first RS resource is configured to a PDCCH in the first CORESET.

As one embodiment, the first signaling set is used for configuring the first CORESET.

As one embodiment, the first signaling set comprises one DownlinkConfigCommon IE.

As one embodiment, the first signaling set comprises one DownlinkConfigCommonSIB IE.

As one embodiment, the first signaling set comprises one BWP-Downlink IE.

As one embodiment, the first signaling set comprises one BWP-DownlinkCommon IE.

As one embodiment, the first signaling set comprises one ControlResourceSet IE.

As one embodiment, the first signaling set comprises one PDCCH-ConfigCommon IE.

As one embodiment, the first signaling set comprises one ControlResourceSet IE, the one ControlResourceSet IE comprises one controlResourceSetId field, and the one controlResourceSetId field is set to a CORESET index of the first CORESET.

As one embodiment, the first signaling set comprises one TCI-State IE, and a referenceSignal field in a qcl-Type1 field or a referenceSignal field in a qcl-Type2 field in the one TCI-State IE is set to an index of the first RS resource.

As one embodiment, the one TCI-State IE is indexed by one TCI-StateId, and the one ControlResourceSet IE is configured with the one TCI-StateId.

As one embodiment, the first CORESET is configured with at least one TCI state, and one TCI state in the at least one TCI state is used for determining that a PDCCH in the first CORESET is QCL with the first RS resource.

As one embodiment, the first CORESET is a COREST with the lowest CORESET index in a CORESET of a PDCCH detected by the first node U01 at a first PDCCH monitoring occasion, and the first PDCCH monitoring occasion is before a time domain resource occupied by the at least one preamble.

As one embodiment, the first PDCCH monitoring occasion is one most recent PDCCH monitoring occasion for detecting a PDCCH before a time domain resource occupied by the at least one preamble.

As one embodiment, a DM-RS port of the first PDCCH is QCL with a DM-RS port of the first CORESET.

As one embodiment, the first node U01 may assume that DM-RS port QCL properties of the first CORESET are used for receiving the first PDCCH.

As one embodiment, the first node U01 may assume that the DM-RS port QCL properties of the first PDCCH are the same as DM-RS port QCL properties of the first CORESET.

As one embodiment, a DM-RS port of the first PDCCH is QCL with a DM-RS port of a PDCCH in the first CORESET.

As one embodiment, the first node U01 may assume that DM-RS port QCL properties of a PDCCH in the first CORESET are used for receiving the first PDCCH.

As one embodiment, the first node U01 may assume that DM-RS port QCL properties of a PDCCH in the first PDCCH are the same as DM-RS port QCL properties of the first CORESET.

### Embodiment 6

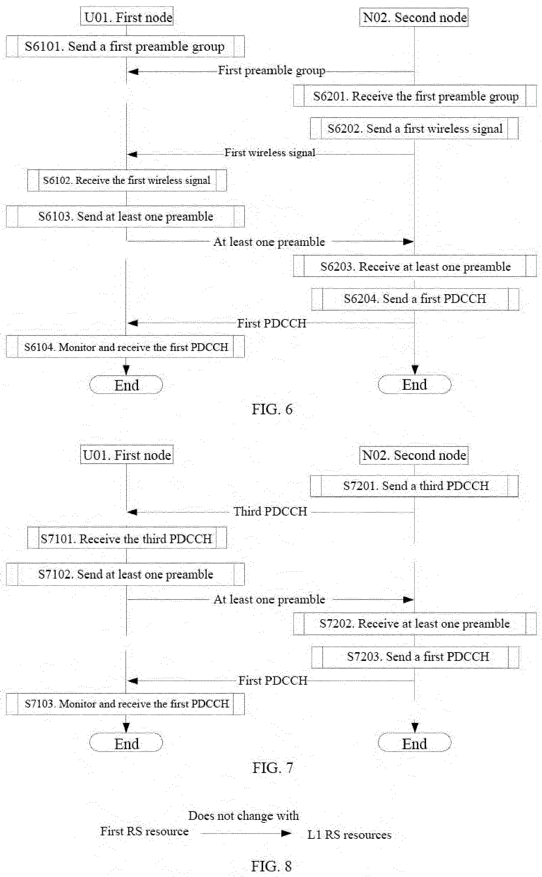

Embodiment 6 illustrates a flowchart of wireless signal transmission according to another embodiment of the present application, as shown in FIG. 6. It is particularly noted that the order in the present embodiment does not limit the order of signal transmission and the order of implementation in the present application.

For a **first node U01,** in step S6101, a first preamble group is sent before the at least one preamble, the first preamble group comprising one or more preambles; in step S6102, in response to sending the first preamble group, a first wireless signal is received before the at least one preamble; in step S6103, at least one preamble is sent; In step S6104, in response to sending the at least one preamble, a first PDCCH is monitored and received in a first time window.

For **a second node N02,** in step S6201, the first preamble group is received; in step S6202, the first wireless signal is sent; in step S6203, at least one preamble is received; in step S6204, the first PDCCH is sent.

In Embodiment 6, the first PDCCH is QCL with a first RS resource, and the at least one preamble is associated with L1 RS resources; the L1 is greater than 1 and any two RS resources in the L1 RS resources are not QCL and the first RS resource is determined by default; the first wireless signal is used for indicating that a random access procedure is successful, and the first RS resource is an RS resource associated with the first preamble group.

As one embodiment, the first preamble group comprises only one preamble.

As one embodiment, the first preamble group comprises a plurality of preambles.

As one embodiment, each preamble in the first preamble group is used for random access.

As one embodiment, the first preamble group is used for one random access attempt.

As one embodiment, the first preamble group is used for Contention Free Random Access (CFRA).

As one embodiment, the first preamble group is used for Contention Based Random Access (CBRA).

As one embodiment, the first preamble group is used for four-step random access.

As one embodiment, the first preamble group is used for two-step random access.

As one embodiment, the first threshold is explicitly indicated.

As one embodiment, the first preamble group is indicated by a PDCCH order.

As one embodiment, the first preamble group is indicated by an RRC message.

As one embodiment, the first preamble group belongs to a second random access procedure; the second random access procedure is different from the first random access procedure.

As one embodiment, the first wireless signal comprises a MAC PDU (Protocol Data Unit).

As one embodiment, the first wireless signal comprises a MAC CE.

As one embodiment, the first wireless signal comprises a MAC subheader.

As one embodiment, the first wireless signal is MAC layer signaling.

As one embodiment, the first wireless signal comprises DCI.

As one embodiment, the first wireless signal comprises PDCCH transmission.

As one embodiment, the first wireless signal is a physical layer signal.

As one embodiment, the first wireless signal is one PDCCH transmission.

As one embodiment, the first wireless signal is DCI.

As one embodiment, the first wireless signal comprises PDCCH transmission and a MAC PDU.

As one embodiment, the first wireless signal comprises PDCCH transmission and a MAC CE.

As one embodiment, the first wireless signal comprises one PDCCH transmission and one MAC PDU; the one PDCCH transmission is scrambled by one TEMPORARY_C-RNTI, and the one TEMPORARY _C-RNTI is indicated by one RAR (Random Access Response); the one MAC PDU comprises one UE Contention Resolution Identity MAC CE, and UE Contention Resolution Identity in the one UE Contention Resolution Identity MAC CE matches a CCCH SDU (Service data unit) sent in an Msg3; the one RAR is triggered by the first preamble group; the Msg3 is triggered by the one RAR; the one PDCCH transmission and the one MAC PDU are triggered by the Msg3.

As one embodiment, the first wireless signal comprises one PDCCH transmission; the one PDCCH transmission is addressed to one C-RNTI; an Msg3 comprises one C-RNTI MAC CE, and the one C-RNTI MAC CE comprises the one C-RNTI; the second random access procedure is initiated for SpCell beam failure recovery, or, the second random access procedure is initiated for beam failure recovery of both BFD-RS sets of SpCell; the one RAR is triggered by the first preamble group; the Msg3 is triggered by the one RAR; the one PDCCH transmission and the one MAC PDU are triggered by the Msg3.

As one embodiment, the first wireless signal comprises one PDCCH transmission; the one PDCCH transmission is addressed to one C-RNTI; an Msg3 comprises one C-RNTI MAC CE, and the one C-RNTI MAC CE comprises the one C-RNTI; the second random access procedure is initiated by a PDCCH order.

As one embodiment, the first wireless signal comprises one PDCCH transmission; the one PDCCH transmission is addressed to one C-RNTI, and the one PDCCH transmission contains a UL grant for a new transmission; an Msg3 comprises one C-RNTI MAC CE, and the one C-RNTI MAC CE comprises the one C-RNTI; The second random access procedure is initiated by a MAC sublayer itself, or, the second random access procedure is initiated by an RRC sublayer.

As one embodiment, the first wireless signal comprises one PDCCH transmission; the one PDCCH transmission is addressed to one C-RNTI; the second random access procedure is initiated for SpCell beam failure recovery, or, the second random access procedure is initiated for beam failure recovery of both BFD-RS sets of SpCell; an MSGA comprises the first preamble group and one C-RNTI MAC CE, and the one C-RNTI MAC CE comprises the one C-RNTI; the one PDCCH transmission is triggered by the MSGA.

As one embodiment, the first wireless signal comprises one PDCCH transmission; the one PDCCH transmission is addressed to one C-RNTI, and the one PDCCH transmission contains a UL grant for a new transmission; when the first PDCCH transmission is received, timeAlignmentTimer associated with a PTAG is running; an MSGA comprises the first preamble group and one C-RNTI MAC CE, and the one C-RNTI MAC CE comprises the one C-RNTI; the one PDCCH transmission is triggered by the MSGA.

As one embodiment, the first wireless signal comprises one PDCCH transmission and one MAC PDU; the one PDCCH transmission is addressed to one C-RNTI; the one MAC PDU comprises one Absolute Timing Advance Command MAC CE; when the first PDCCH transmission is received, timeAlignmentTimer associated with a PTAG is not running; an MSGA comprises the first preamble group and one C-RNTI MAC CE, and the one C-RNTI MAC CE comprises the one C-RNTI; the one PDCCH transmission is triggered by the MSGA.

As one embodiment, the wireless first signal comprises one PDCCH transmission and one MSGB; the one PDCCH transmission is scrambled by one MSGB-RNTI; the one MSGB comprises one successRAR MAC subPDU, and UE Content Resolution Identity in the one successRAR MAC subPDU matches a CCCH SDU sent in an MSGA; the one PDCCH transmission and the one MSGB are triggered by the MSGA.

As one embodiment, the first wireless signal is used for indicating that the second random access procedure is successful.

As one embodiment, in response to the first wireless signal being received, the second random access procedure is considered to be successfully completed.

As one embodiment, the first wireless signal is used for determining that a random access procedure is successful.

As one embodiment, the first preamble group is associated with the first RS resource.

As one embodiment, the first preamble group is associated with only the first RS resource.

As one embodiment, the first preamble group is associated with at least one RS resource, and the first RS resource is one RS resource in the at least one RS resource.

As one embodiment, the first preamble group indicates only the first RS resource.

As one embodiment, the first preamble group indicates at least one RS resource, and the first RS resource is one RS resource in the at least one RS resource.

As one embodiment, the first RS resource is associated with the first preamble group.

As one embodiment, the first RS resource is an only RS resource associated with the first preamble group.

As one embodiment, the first RS resource is one RS resource in a plurality of RS resources associated with the first preamble group.

As one embodiment, the first RS resource is a designated RS resource in a plurality of RS resources associated with the first preamble group.

As one embodiment, the first preamble group and the first RS resource are indicated by a PDCCH order.

As one embodiment, the first preamble group and the first RS resources are configured by BFR-SSB-Resource.

As one embodiment, the first preamble group and the first RS resources are configured by BFR-CSIRS-Resource.

As one embodiment, the first preamble group and the first RS resource are configured through an RRC field with a name comprising BFR-SSB-Resource.

As one embodiment, the first preamble group and the first RS resource are configured through an RRC field with a name comprising BFR-CSIRS-Resource.

As one embodiment, the first preamble group and the first RS resource are configured through an RRC field with a name comprising CFRA-SSB-Resource.

As one embodiment, the first preamble group and the first RS resource are configured through an RRC field with a name comprising CFRA-CSIRS-Resource.

As one embodiment, the first preamble group and the first RS resource are configured by a RACH-ConfigDedicated IE.

As one embodiment, the first preamble group is the first random access resource group.

As one embodiment, the at least one preamble is independent of the first preamble group.

As one embodiment, the at least one preamble is related to the first preamble group.

As one embodiment, each preamble in the at least one preamble is one preamble in the first preamble group.

### Embodiment 7

Embodiment 7 illustrates a flowchart of wireless signal transmission according to a further embodiment of the present application, as shown in FIG. 7. It is particularly noted that the order in the present embodiment does not limit the order of signal transmission and the order of implementation in the present application.

For**a first node U01,** in step S7101, a third PDCCH is received before the at least one preamble is sent; in step S7102, at least one preamble is sent; In step S7103, in response to sending the at least one preamble, a first PDCCH is monitored and received in a first time window.

For **a second node N02,** in step S7201, a first PDCCH is sent; in step S7202, the at least one preamble is received; in step S7203, the first PDCCH is sent.

In Embodiment 7, the first PDCCH is QCL with a first RS resource, and the at least one preamble is associated with L1 RS resources; the L1 is greater than 1 and any two RS resources in the L1 RS resources are not QCL and the first RS resource is determined by default; the third PDCCH is scrambled by a first C-RNTI; the third PDCCH is used for determining the first RS resource.

As one embodiment, the third PDCCH is a piece of DCI.

As one embodiment, the third PDCCH is the last piece of DCI successfully received before sending the at least one preamble.

As one embodiment, the third PDCCH is a piece of predefined DCI successfully received before sending the at least one preamble.

As one embodiment, the third PDCCH is a piece of DCI successfully received before sending the at least one preamble.

As one embodiment, the third PDCCH is a piece of DCI received on the first cell before sending the at least one preamble.

As one embodiment, a format of the third PDCCH is DCI format 1_0.

As one embodiment, a format of the third PDCCH is DCI format 1_1.

As one embodiment, a format of the third PDCCH is DCI format 0_0.

As one embodiment, a format of the third PDCCH is DCI format 0_1.

As one embodiment, the third PDCCH is used for scheduling a PDSCH.

As one embodiment, the third PDCCH is used for scheduling a PUSCH.

As one embodiment, the third PDCCH is one PDCCH order.

As one embodiment, the third PDCCH is addressed to the first C-RNTI.

As one embodiment, CRC of the third PDCCH is scrambled by the first C-RNTI.

As one embodiment, "the third PDCCH is used for determining the first RS resource" comprises: the third PDCCH is QCL with the first RS resource.

As one embodiment, "the third PDCCH is QCL with the first RS resource" comprises: a DM-RS port of the third PDCCH is QCL with the first RS resource.

As one embodiment, "the third PDCCH is QCL with the first RS resource" comprises: a PDCCH candidate for receiving the third PDCCH is QCL with the first RS resource.

As one embodiment, an RRC message is used for determining that the third PDCCH is QCL with the first RS resource.

As one embodiment, one TCI state is used for determining that a DM-RS port of the third PDCCH is QCL with the first RS resource.

As one embodiment, the first node U01 considers that a DM-RS port of the first PDCCH and a DM-RS port of the third PDCCH are both subjected to QCL to the first RS resource.

As one embodiment, the first node U01 considers that DM-RS port quasi co-location properties of the first PDCCH are the same as DM-RS port quasi co-location properties of the third PDCCH.

### Embodiment 8

Embodiment 8 illustrates a schematic diagram of a first RS resource not changing with L1 RS resources according to one embodiment of the present application.

In Embodiment 8, the phrase "the first RS resource is determined by default" comprises: the first RS resource does not change with the L1 RS resources.

As one embodiment, "the first RS resource does not change with the L1 RS resources" comprises: the first RS resource is not any RS resource in the L1 RS resources.

As one embodiment, "the first RS resource does not change with the L1 RS resources" comprises: the first RS resource is independent of the L1 RS resources.

As one embodiment, "the first RS resource does not change with the L1 RS resources" comprises: the first RS resource is independent of the size of the L1.

As one embodiment, "the first RS resource does not change with the L1 RS resources" comprises: the first RS resource is independent of the number of the L1 RS resources.

As one embodiment, "the first RS resource does not change with the L1 RS resources" comprises: the first RS resource is independent of which RS resources are included in the L1 RS resources.

As one embodiment, the L1 RS resources comprise the first RS resource, and the first PDCCH is QCL with the first RS resource.

As one embodiment, the L1 RS resources do not comprise the first RS resource, and the first PDCCH is QCL with the first RS resource.

As one embodiment, regardless of whether the L1 RS resources comprise the first RS resource, the first PDCCH is QCL with the first RS resource.

### Embodiment 9

Embodiment 9 illustrates a schematic diagram of a triggering event of at least one preamble being a first event according to one embodiment of the present application.

In Embodiment 9, a triggering event of the at least one preamble is a first event, the first event is any candidate event in a first candidate event set, and the first candidate event set comprises initial access.

As one embodiment, the L1 depends on the first candidate event set; and only when at least the first event is one candidate event in the first candidate event set, the L1 is greater than 1.

As one embodiment, when the first event occurs, the first random access procedure is initiated.

As one embodiment, in response to a first event being triggered, the first random access procedure is initiated.

As one embodiment, in response to a first event being triggered, a protocol layer where the first event occurs sends one indication to a MAC (Medium Access Control) sublayer, and in response to receiving the one indication at a MAC sublayer, the first random access procedure is initiated.

As one embodiment, the first event occurs at a MAC sublayer.

As one embodiment, the first event occurs at an RRC (Radio Resource Control) sublayer.

As one embodiment, the first event occurs at a Physical Layer (L1).

As one embodiment, the first event is used for triggering the first random access procedure.

As one embodiment, the first candidate event set only comprises one candidate event.

As one embodiment, the first candidate event set comprises at least one candidate event.

As one embodiment, the first candidate event set comprises at least two candidate events.

As one embodiment, each candidate event in the first candidate event set is used for triggering a random access procedure.

As one embodiment, one event in the first candidate event set is initial access.

As one embodiment, the initial access refers to being related to initial access from RRC_IDLE.

As one embodiment, one event in the first candidate event set is an RRC Connection Re-establishment procedure.

As one embodiment, one event in the first candidate event set is a Scheduling Request (SR) failure.

As one embodiment, one event in the first candidate event set is an RRC Connection Resume procedure from RRC_INACTIVE.

As one embodiment, any event in the first candidate event set is independent of BFR.

As one embodiment, any event in the first candidate event set is not BFR.

As one embodiment, the BFR is BFR for the first cell.

As one embodiment, the BFR is BFR of two BFD (Beam Failure Detection)-RS sets for the first cell.

As one embodiment, the first cell is configured with two BFD-RS sets.

As one embodiment, the first cell is not configured with two BFD-RS sets.

As one embodiment, the first cell is configured with only one BFD-RS set.

### Embodiment 10

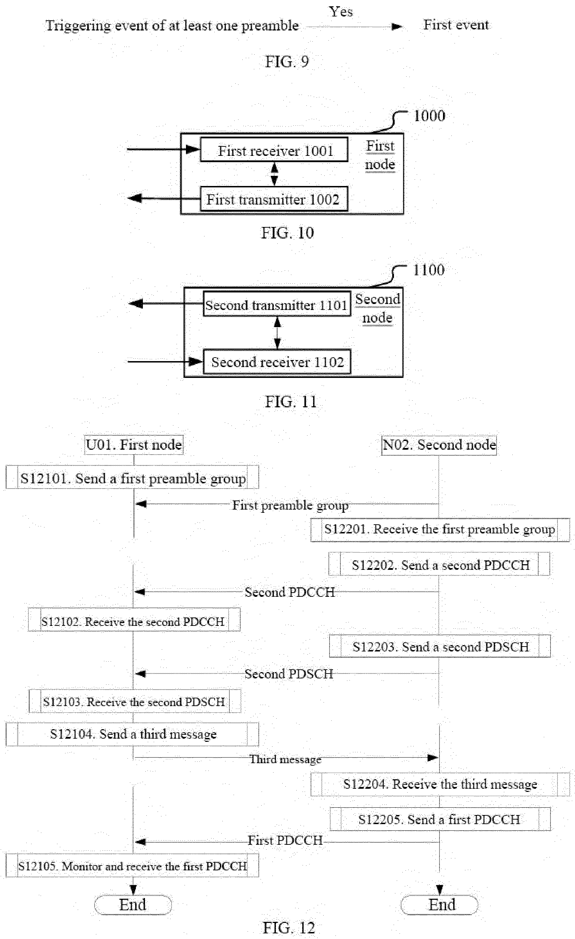

Embodiment 10 illustrates a structural block diagram of a processing apparatus for a first node according to one embodiment of the present application, as shown in FIG. 10. In FIG. 10, the processing apparatus 1000 in the first node comprises a first receiver 1001 and a first transmitter 1002.

The first transmitter 1002 sends at least one preamble;
the first receiver 1001 monitors and receives a first PDCCH in a first time window in response to sending the at least one preamble;
in Embodiment 10, the first PDCCH is QCL with a first RS resource, and the at least one preamble is associated with L1 RS resources; the first RS resource depends on the L1; and the L1 is 1 and the first RS resource is the L1 RS resources, or the L1 is greater than 1, any two RS resources in the L1 RS resources are not QCL, and the first RS resource is determined by default.

As one embodiment, the first receiver 1001 receives a first signaling set, the first signaling set being used for configuring the first RS resource; wherein the first signaling set comprises an RRC message.

As one embodiment, the first receiver 1001 monitors a PDCCH in a first CORESET; wherein the PDCCH in the first CORESET is QCL with the first RS resource.

As one embodiment, the first transmitter 1002 transmits a first preamble group before the at least one preamble, the first preamble group comprising one or more preambles; the first receiver 1001 receives a first wireless signal before the at least one preamble in response to sending the first preamble group; wherein the first wireless signal is used for indicating that a random access procedure is successful, and the first RS resource is an RS resource associated with the first preamble group.

As one embodiment, the first receiver 1001 receives a third PDCCH before the at least one preamble is sent; wherein the third PDCCH is scrambled by a first C-RNTI; the third PDCCH is used for determining the first RS resource.

As one embodiment, the phrase "the first RS resource is determined by default" comprises: the first RS resource does not change with the L1 RS resources.

As one embodiment, a triggering event of the at least one preamble is a first event, the first event is any candidate event in a first candidate event set, and the first candidate event set comprises initial access.

As one embodiment, the first receiver 1001 comprises an antenna 452, a receiving device 454, a multi-antenna receiving processor 458, a receiving processor 456, a controller/processor 459, a memory 460, and a data source 467 in FIG. 4 of the present application.

As one embodiment, the first receiver 1001 comprises an antenna 452, a receiving device 454, a multi-antenna receiving processor 458, and a receiving processor 456 in FIG. 4 of the present application.

As one embodiment, the first receiver 1001 comprises an antenna 452, a receiving device 454, and a receiving processor 456 in FIG. 4 of the present application.

As one embodiment, the first transmitter 1002 comprises an antenna 452, a transmitting device 454, a multi-antenna transmitting processor 457, a transmitting processor 468, a controller/processor 459, a memory 460 and a data source 467 in FIG. 4 of the present application.

As one embodiment, the first transmitter 1002 comprises an antenna 452, a transmitting device 454, a multi-antenna transmitting processor 457, and a transmitting processor 468 in FIG. 4 of the present application.

As one embodiment, the first transmitter 1002 comprises an antenna 452, a transmitting device 454, and a transmitting processor 468 in FIG. 4 of the present application.

### Embodiment 11

Embodiment 11 illustrates a structural block diagram of a processing apparatus used in a second node according to one embodiment of the present application, as shown in FIG. 11. In FIG. 11, a processing apparatus 1100 in the second node comprises a second transmitter 1101 and a second receiver 1102.

The second receiver 1102 receives at least one preamble;
the second transmitter 1101 sends a first PDCCH in response to receiving the at least one preamble; the first PDCCH being monitored and received in a first time window;
in Embodiment 11, the first PDCCH is QCL with a first RS resource, and the at least one preamble is associated with L1 RS resources; the first RS resource depends on the L1; and the L1 is 1 and the first RS resource is the L1 RS resources, or the L1 is greater than 1, any two RS resources in the L1 RS resources are not QCL, and the first RS resource is determined by default.

As one embodiment, the second transmitter 1101 sends a first signaling set, the first signaling set being used for configuring the first RS resource; wherein the first signaling set comprises an RRC message.

As one embodiment, a sender of the at least one preamble monitors a PDCCH in a first CORESET; and the PDCCH in the first CORESET is QCL with the first RS resource.

As one embodiment, the second receiver 1102 receives a first preamble group before the at least one preamble, the first preamble group comprising one or more preambles; the second transmitter 1101 sends a first wireless signal before the at least one preamble in response to receiving the first preamble group; wherein the first wireless signal is used for indicating that a random access procedure is successful, and the first RS resource is an RS resource associated with the first preamble group.

As one embodiment, the second transmitter 1101 sends a third PDCCH before receiving the at least one preamble; wherein the third PDCCH is scrambled by a first C-RNTI; the third PDCCH is used for determining the first RS resource.

As one embodiment, the phrase "the first RS resource is determined by default" comprises: the first RS resource does not change with the L1 RS resources.

As one embodiment, a triggering event of the at least one preamble is a first event, the first event is any candidate event in a first candidate event set, and the first candidate event set comprises initial access.

As one embodiment, the second transmitter 1101 comprises an antenna 420, a transmitting device 418, a multi-antenna transmitting processor 471, a transmitting processor 416, a controller/processor 475, and a memory 476 in FIG. 4 of the present application.

As one embodiment, the second transmitter 1101 comprises an antenna 420, a transmitting device 418, a multi-antenna transmitting processor 471, and a transmitting processor 416 in FIG. 4 of the present application.

As one embodiment, the second transmitter 1101 comprises an antenna 420, a transmitting device 418, and a transmitting processor 416 in FIG. 4 of the present application.

As one embodiment, the second receiver 1102 comprises an antenna 420, a receiving device 418, a multi-antenna receiving processor 472, a receiving processor 470, a controller/processor 475, and a memory 476 in FIG. 4 of the present application.

As one embodiment, the second receiver 1102 comprises an antenna 420, a receiving device 418, a multi-antenna receiving processor 472, and a receiving processor 470 in FIG. 4 of the present application.

As one embodiment, the second receiver 1102 comprises an antenna 420, a receiving device 418, and a receiving processor 470 in FIG. 4 of the present application.

### Embodiment 12

Embodiment 12 illustrates a flowchart of wireless signal transmission according to a further embodiment of the present application, as shown in FIG. 12. It is particularly noted that the order in the present embodiment does not limit the order of signal transmission and the order of implementation in the present application.

For a **first node U01,** in step S12101, at least one preamble is sent; in step S12102, a second PDCCH is received in response to sending the at least one preamble; in step S12103, a second PDSCH is received according to scheduling of the second PDCCH, the second PDSCH comprising a second MAC PDU, and the second PDCCH being used for scheduling the second MAC PDU; in step S12104, a third message is sent in response to that the second MAC PDU is successfully received; and in step S12105, in response to the third message being sent, a first PDCCH is monitored and received in a first time window.

For a **second node N02,** in step S12201, at least one preamble is received; in step S12202, a second PDCCH is sent; in step S12203, a second PDSCH is sent; in step S12204, the third message is received; in step S12205, the first PDCCH is sent.

In Embodiment 12, the first PDCCH is QCL with a first RS resource, and the at least one preamble is associated with L1 RS resources; the L1 is greater than 1 and any two RS resources in the L1 RS resources are not QCL and the first RS resource is determined by default.

As one embodiment, the at least one preamble, the second PDCCH, the second PDSCH, the second MAC PDU, the third message, and the first PDCCH belong to the first random access procedure.

As one embodiment, in a time interval from a time at which the at least one preamble is sent to a time at which the first PDCCH is received, PREAMBLE_POWER_RAMPING_COUNTER is not increased.

As one embodiment, in a time interval from a time at which the at least one preamble is sent to a time at which the first PDCCH is received, PREAMBLE_TRANSMISSION_COUNTER is not increased.

As one embodiment, the second PDCCH is used for scheduling a random access response to the at least one preamble.

As one embodiment, the second PDCCH is used for scheduling the second PDSCH.

As one embodiment, the second PDCCH is used for scheduling the second MAC PDU.

As one embodiment, the second PDCCH is a piece of DCI.

As one embodiment, a format of the second PDCCH is DCI format 1_0.

As one embodiment, a format of the second PDCCH is DCI format 1_1.

As one embodiment, the second PDCCH is received in ra-ResponseWindow.

As one embodiment, the second PDCCH is scrambled by one RA-RNTI.

As one embodiment, the second PDSCH is one PDSCH.

As one embodiment, scheduling information of the second PDSCH is indicated by the second PDCCH.

As one embodiment, the second PDSCH is used to bear the second MAC PDU.

As one embodiment, the second MAC PDU is transmitted on the second PDSCH.

As one embodiment, the second MAC PDU is one MAC PDU.

As one embodiment, the second MAC PDU comprises one MAC RAR.

As one embodiment, the second MAC PDU comprises a random access response to the at least one preamble.

As one embodiment, the third message is scheduled by a MAC RAR in the second MAC PDU.

As one embodiment, the third message is scheduled by a UL grant in a MAC RAR in the second MAC PDU.

As one embodiment, the third message is scheduled by a piece of DCI, a format of the piece of DCI is DCI format 0_0, CRC of the piece of DCI is scrambled by a TC-RNTI, and the TC-RNTI is indicated by a MAC RAR in the second MAC PDU; the moment when the piece of DCI is received is later than the moment when the second MAC PDU is received.

As one embodiment, the third message comprises one C-RNTI MAC CE, and the first C-RNTI MAC CE comprises the first C-RNTI.

As one embodiment, the third message comprises one Msg3.

As one embodiment, the third message comprises one PUSCH transmission.

As one embodiment, the third message comprises one CCCH SDU.

As one embodiment, the first PDCCH is used, in response to the third message, to schedule the third message for an uplink grant indicated by a RAR of the at least one preamble.

As one embodiment, the first PDCCH is used for determining that the first random access procedure is successfully completed.

As one sub-embodiment of this embodiment, the first PDCCH is used for indicating that a random access procedure is successful.

As one embodiment, the first PDCCH is scrambled by a first C-RNTI.

As one sub-embodiment of this embodiment, the third message comprises one C-RNTI MAC CE, and the one C-RNTI MAC CE comprises the first C-RNTI.

As one sub-embodiment of this embodiment, CRC of the first PDCCH is scrambled by the first C-RNTI.

As one sub-embodiment of this embodiment, the first PDCCH is any DCI format scrambled by the first C-RNTI.

As one sub-embodiment of this embodiment, the first C-RNTI is one C-RNTI.

As one sub-embodiment of this embodiment, the first C-RNTI is a C-RNTI of the first node U01.

As one sub-embodiment of this embodiment, the first C-RNTI is a C-RNTI of the first node U01 in the first cell.

As one sub-embodiment of this embodiment, the first C-RNTI is allocated to a MAC entity corresponding to a cell group to which the first cell belongs.

As one embodiment, the first PDCCH is used for scheduling a UE Content Resolution Identity MAC CE.

As one embodiment, the first PDCCH is scrambled by a first TC-RNTI (TEMPORARY C-RNTI).

As one sub-embodiment of this embodiment, the third message comprises one CCCH SDU.

As one sub-embodiment of this embodiment, CRC of the first PDCCH is scrambled by the first TC-RNTI.

As one sub-embodiment of this embodiment, the first PDCCH is DCI format 1_0 scrambled by the first TC-RNTI.

As one sub-embodiment of this embodimens, the first TC-RNTI is one TC-RNTI.

As one sub-embodiment of this embodiment, the first TC-RNTI is indicated by one MAC RAR.

As one embodiment, the first time window is one timer.

As one sub-embodiment of this embodiment, the first time window is used to monitor a response for an Msg3.

As one sub-embodiment of this embodiment, the first time window is a timer for monitoring contention resolution.

As one sub-embodiment of this embodiment, the first time window is ra-ContentionResolutionTimer.

As one embodiment, the second PDCCH is associated with the first RS resource.

As one embodiment, the second PDCCH is QCL with the first RS resource.

As one embodiment, the first node U01 considers that the second PDCCH is QCL with the first RS resource.

As one embodiment, the first node U01 may consider that the second PDCCH is QCL with the first RS resource.

As one embodiment, "the second PDCCH is QCL with the first RS resource" comprises: the second PDCCH has the same DM-RS port quasi co-location properties as the first RS resource.

As one embodiment, "the second PDCCH is QCL with the first RS resource" comprises: a DM-RS port of the second PDCCH is QCL with the first RS resource.

As one embodiment, "the second PDCCH is QCL with the first RS resource" comprises: a DM-RS port for receiving the second PDCCH is QCL with the first RS resource.

As one embodiment, "the second PDCCH is QCL with the first RS resource" comprises: spatial parameters of the first RS resource are used for determining spatial parameters for receiving the second PDCCH.

As one embodiment, "the first RS resource is determined by default" comprises: the second PDCCH is used for determining the first RS resource.

As one embodiment, "the first RS resource is determined by default" comprises: an RS resource subjected to QCL by the second PDCCH is the first RS resource.

As one embodiment, "the first RS resource is determined by default" comprises: the first RS resource is an RS resource associated with the second PDCCH.

As one embodiment, "the first RS resource is determined by default" comprises: the first RS resource is an RS resource subjected to QCL by the second PDCCH.

As one embodiment, "the first RS resource is determined by default" comprises: the first RS resource is an RS resource that is considered by the first node U01 to have been subjected to QCL by the second PDCCH.

As one embodiment, "the first RS resource is determined by default" comprises: the first RS resource is an RS resource that may be considered by the first node U01 to have been subjected to QCL by the second PDCCH.

As one embodiment, an RS resource subjected to QCL by the second PDCCH comprises: an RS resource subjected to QCL by a DM-RS port of the second PDCCH.

As one embodiment, an RS resource subjected to QCL by the second PDCCH comprises: an RS resource subjected to QCL by a DM-RS port for receiving the second PDCCH.

As one embodiment, an RS resource subjected to QCL by the second PDCCH comprises: an RS resource that is considered by the first node U01 to have been subjected to QCL by a DM-RS port of the second PDCCH.

As one embodiment, an RS resource subjected to QCL by the second PDCCH comprises: an RS resource that may be considered by the first node U01 to have been subjected to QCL by a DM-RS port of the second PDCCH.

As one embodiment, the second PDSCH is QCL with the first RS resource.

As one embodiment, the first node U01 assumes that the second PDSCH is QCL with a first RS resource.

As one embodiment, the first node U01 may assume that the second PDSCH is QCL with a first RS resource.

As one embodiment, when receiving the second PDSCH, the first node U01 may assume that the second PDSCH is QCL with the first RS resource.

As one embodiment, when monitoring and receiving the second PDSCH, the first node U01 may assume that the second PDSCH is QCL with the first RS resource.

As one embodiment, if the second PDSCH is received, the first node U01 may assume that the second PDSCH is QCL with the first RS resource.

As one embodiment, if the second PDSCH is successfully received, the first node U01 may assume that the second PDSCH is QCL with the first RS resource.

As one embodiment, "the second PDSCH is QCL with the first RS resource" comprises: the second PDSCH has the same DM-RS port quasi co-location properties as the first RS resource.

As one embodiment, "the second PDSCH is QCL with the first RS resource" comprises: a DM-RS port of the second PDSCH is QCL with the first RS resource.

As one embodiment, "the second PDSCH is QCL with the first RS resource" comprises: a DM-RS port for receiving the second PDSCH is QCL with the first RS resource.

As one embodiment, "the second PDSCH is QCL with the first RS resource" comprises: spatial parameters of the first RS resource are used for determining spatial parameters for receiving the second PDSCH.

As one embodiment, the first node U01 considers that a DM-RS port of the second PDSCH and a DM-RS port of the second PDCCH are both subjected to QCL to the first RS resource.

As one embodiment, the first node U01 considers that DM-RS port quasi co-location properties of the second PDSCH are the same as DM-RS port quasi co-location properties of the second PDCCH.

As one embodiment, the first node U01 considers that a DM-RS port of the first PDCCH and a DM-RS port of the second PDCCH are both subjected to QCL to the first RS resource.

As one embodiment, the first node U01 considers that DM-RS port quasi co-location properties of the first PDCCH are the same as DM-RS port quasi co-location properties of the second PDCCH.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. User equipment, terminals and UE in the present application include, but are not limited to, wireless communication equipment such as drones, communication modules on drones, remote-controlled aircrafts, flying machines, small aircrafts, mobile phones, tablets, notebook computers, vehicle communication equipment, wireless sensors, network cards, Internet of Things terminals, RFID terminals, NB-IOT terminals, MTC (Machine Type Communication) terminals, eMTC (enhanced MTC) terminals, data cards, network cards, vehicle communication equipment, low-cost mobile phones, and low-cost tablets. The base station or system equipment in the present application includes, but is not limited to, wireless communication equipment such as macro cellular base stations, micro cellular base stations, home base stations, relay base stations, gNB (NR Node B) NR Node B, TRPs (Transmitter Receiver Points).

The above is only a preferred embodiment of the present application and is not intended to limit the scope of protection of the present application. Any modifications, equivalent substitutions, improvements and the like made within the spirit and principles of the present invention shall be included within the scope of protection of the present invention.

## Claims

1. A first node used for wireless communication, comprising:
a first transmitter for sending at least one preamble; and
a first receiver for, in response to sending the at least one preamble, monitoring and receiving a first PDCCH in a first time window;
wherein the first PDCCH is QCL with a first RS resource; the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default.

2. The first node according to claim 1, comprising:
the first receiver for receiving a first signaling set, the first signaling set being used for configuring the first RS resource;
wherein the first signaling set comprises an RRC message.

3. The first node according to claim 1 or 2, comprising:
the first receiver for monitoring a PDCCH in a first CORESET,
wherein the PDCCH in the first CORESET is QCL with the first RS resource.

4. The first node according to any one of claims 1 to 3, comprising:
the first transmitter for sending a first preamble group before the at least one preamble, the first preamble group comprising one or more preambles; and
the first receiver for, in response to sending the first preamble group, receiving a first wireless signal before the at least one preamble,
wherein the first wireless signal is used for indicating that a random access procedure is successful, and the first RS resource is an RS resource associated with the first preamble group.

5. The first node according to any one of claims 1 to 4, comprising:
the first receiver for receiving a third PDCCH before the at least one preamble is sent,
wherein the third PDCCH is scrambled by a first C-RNTI; the third PDCCH is used for determining the first RS resource.

6. The first node according to any one of claims 1 to 5, wherein the phrase "the first RS resource is determined by default" comprises: the first RS resource does not change with the L1 RS resources.

7. The first node according to any one of claims 1 to 6, wherein a triggering event of the at least one preamble is a first event, the first event is any candidate event in a first candidate event set, and the first candidate event set comprises initial access.

8. A second node used for wireless communication, comprising:
a second receiver for receiving at least one preamble; and
a second transmitter for, in response to receiving the at least one preamble, sending a first PDCCH; the first PDCCH being monitored and received in a first time window;
wherein the first PDCCH is QCL with a first RS resource; the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default.

9. A method used in a first node for wireless communication, comprising:
sending at least one preamble;
and in response to sending the at least one preamble, monitoring and receiving a first PDCCH in a first time window;
wherein the first PDCCH is QCL with a first RS resource; the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default.

10. A method used in a second node for wireless communication, comprising:
receiving at least one preamble;
and in response to receiving the at least one preamble, sending a first PDCCH; the first PDCCH being monitored and received in a first time window;
wherein the first PDCCH is QCL with a first RS resource; the at least one preamble is associated with L1 RS resources; the first RS resource depends on the L1; the L1 is 1 and the first RS resource is the L1 RS resources, or the L1 is greater than 1, any two RS resources in the L1 RS resources are not QCL, and the first RS resource is determined by default.
